# EUROPEAN PATENT APPLICATION

(11) **EP 4 620 716 A1**
(43) Date of publication of application: **24.09.2025**
(21) Application number: 25157561.9
(22) Date of filing: 13.02.2025
(51) Int. Cl.: B60L 3/00, B60L 3/04, B60L 53/10, B60L 53/14, B60L 53/62, B60L 53/63, B60L 53/66, B60L 53/67, B60L 53/68, B60L 55/00, B60L 58/14, B60L 58/16, H02J 3/32, B60L 53/30

(54) **OBSERVATION TIME CONFIGURATION FOR AN ELECTRIC VEHICLE**

(30) Priority: 14.02.2024 US 202463553470 P; 10.02.2025 US 202519049234
(71) Applicant: Volvo Car Corporation, 405 31 Göteborg (SE)
(72) Inventor: KÖSE, Emir, 40531 Göteborg (SE); SCHÖLD, Jones, 40531 Göteborg (SE); SHAH, Sourav, 40531 Göteborg (SE); ARUMUGAM, Vijay, 40531 Göteborg (SE)
(74) Representative: Maiwald GmbH

(57) **Abstract**

The described technology is generally directed towards implementation of an electric vehicle (EV) (110) as an energy generator for a vehicle to grid (V2G) power discharge operation. Energy available at a battery (112A-n) onboard the EV (110) can be discharged to an electrical grid (130), e.g., via an electric vehicle (110) supply equipment (EVSE)/wallbox (120). Prior to power discharge occurring, an *ObservationTime* can be defined, and while the duration of the *ObservationTime* has not been met, power discharge between the EV (110) and the grid (130) can be prevented. Further, power discharge can be prevented based on one or more operational conditions not being met at the EV (110) and/or the grid (130). In the event of the *Observation Time*, and the one or more operational conditions being met at the EV (110) and/or the grid (130), power discharge can be enabled. A *GridObservationCompleted* parameter, having a binary configuration, can be toggled TRUE/FALSE to control the power discharge operation.

## Description

### CROSS-REFERENCE TO RELATED APPLICATIONS

This application claims priority to U.S. Provisional Patent Application No. 63/553,470 filed on February 14, 2024, entitled "OBSERVATION TIME CONFIGURATION FOR AN ELECTRIC VEHICLE".

### TECHNICAL FIELD

This application relates to techniques facilitating operation of an electric vehicle as a power source.

### BACKGROUND

Electric vehicles are powered by an electric motor that draws energy from an onboard battery. The battery can be recharged at any time, e.g., during a journey, while parked for a duration of time (e.g., overnight). The charging operation typically entails connection of the electric vehicle to a charging station via a charging cable plugged into a charging port on the vehicle. Conventionally, when an electric vehicle is connected to the electrical grid, via a charging station, the electric vehicle is charged. However, recent specifications and regulations enable implementation of an electric vehicle as a power source/generator, with power discharge from a battery onboard the vehicle to the electrical grid.

The above-described background is merely intended to provide a contextual overview of some current issues and is not intended to be exhaustive. Other contextual information may become further apparent upon review of the following detailed description.

### SUMMARY

The following presents a simplified summary of the disclosed subject matter to provide a basic understanding of one or more of the various embodiments described herein. This summary is not an extensive overview of the various embodiments. It is intended neither to identify key or critical elements of the various embodiments nor to delineate the scope of the various embodiments. The sole purpose of the Summary is to present some concepts of the disclosure in a streamlined form as a prelude to the more detailed description that is presented later.

In one or more embodiments described herein, systems, devices, computer-implemented methods, configurations, apparatus, and/or computer program products are presented to enable BPT between an EV and an EVSE, whereby, V2G energy transfer can be prevented until a defined period of time has elapsed (*ObservationTime*) and operating conditions at an EV battery and an electrical grid are acceptable.

According to one or more embodiments, an electric vehicle supply equipment (EVSE) system is presented. The EVSE system comprises at least one processor, and at least one memory coupled to the at least one processor and having instructions stored thereon, wherein the system can be configured to ensure an observation time is fulfilled while operating conditions at a battery at an EV and at an electrical grid are determined to be acceptable. In response to the at least one processor executing the instructions, the instructions facilitate performance of operations, comprising: monitoring, for a defined time period, operational condition of a battery located on an electric vehicle (EV), wherein the battery is electrically coupled to the EVSE, further monitoring, for the defined time period, operational condition of an electric power grid connected to the EVSE, and further, in response to determining that (a) the defined time period has expired, and (b) at least one of an operational condition of the battery is unacceptable or an operational condition of the electric power grid is unacceptable, preventing the battery to function as a power source for the electric power grid.

In an embodiment, the operations can further comprise, in response to determining that (a) the defined time period has expired, (b) the operational condition of the battery is acceptable, and (c) the operational condition of the electric power grid is acceptable, enabling the battery to function as a power source for the electric power grid, wherein the battery and the electric power grid operate with a vehicle to grid (V2G) configuration.

In another embodiment, the operations can further comprise in response to determining the defined time period has expired, configuring a *GridObservationCompleted* parameter with a value of TRUE, and further transmitting the *GridObservationCompleted* parameter with the value of TRUE to the EV.

In a further embodiment, the defined time period can be an *ObservationTime* defining a minimum time period for which the operational condition of the battery and the operational condition of the grid can be monitored to ensure no adverse operating condition is present during connection of the battery to the grid via the EVSE system, and the *GridObservationCompleted* parameter having a value of TRUE indicates the *ObservationTime* has elapsed.

In another embodiment, the operations can further comprise setting a *discharge limit* parameter to a discharge value, wherein the discharge limit parameter defines a magnitude of a discharge operation between the battery and the grid; and in response to determining the *GridObservationCompleted* parameter having a value of TRUE, implementing the *discharge limit* parameter at the battery to facilitate discharge of electrical energy between the battery and the grid, via the EVSE.

In another embodiment, the operations can further comprise in response to a determination that the defined time period has not expired, configuring a *GridObservationCompleted* parameter with a value of FALSE, and transmitting the *GridObservationCompleted* parameter with the value of FALSE to the EV, preventing power discharge by the EV to the grid.

In an embodiment, the defined time period can be an *ObservationTime* defining a minimum time period for which the operational condition of the battery and the operational condition of the grid are monitored to ensure no adverse operating condition during connection of the battery to the grid via the EVSE system, and the *GridObservationCompleted* parameter having a value of FALSE indicates the *ObservationTime* has not elapsed.

In a further embodiment, the *GridObservationCompleted* parameter can be transmitted in a communication between the EVSE and the EV, and wherein the communication can be transmitted in compliance with International Organization of Standardization (ISO) 15118-20.

In another embodiment, the battery can be configured to provide electrical energy to at least one component located on the EV.

In further embodiments, a computer-implemented method is provided, wherein the method comprises monitoring, by a device comprising at least one processor, for a defined time period, a first operational condition of a battery located on an electric vehicle (EV), wherein device is located in an electric vehicle supply equipment (EVSE), and the battery is electrically coupled to the EVSE, and further monitoring, by the device, for the defined time period, a second operational condition of an electric power grid connected to the EVSE. In an embodiment, the operations can further comprise, in response to a determination, by the device, that (a) the defined time period has expired, (b) the first operational condition of the battery is acceptable, and (c) the second operational condition of the electric power grid is acceptable, enabling, by the device, the battery to function as a power source for the electric power grid, wherein the battery and the electric power grid operate with a vehicle to grid (V2G) configuration.

Further embodiments can include a computer program product stored on a non-transitory computer-readable medium and comprising machine-executable instructions, wherein, in response to being executed, the machine-executable instructions can cause a system located at an electric vehicle supply equipment (EVSE), to perform operations, comprising monitoring, for a defined time period, a first operational condition of a battery located on an electric vehicle (EV), wherein the battery is electrically coupled to the EVSE. The operations can further comprise monitoring, for the defined time period, a second operational condition of an electric power grid connected to the EVSE. The operations can further comprise, in response to a determination, that (a) the defined time period has expired, (b) the first operational condition of the battery is acceptable, and (c) the second operational condition of the electric power grid is acceptable, enabling, the battery to function as a power source for the electric power grid, wherein the battery and the electric power grid operate with a vehicle to grid (V2G) configuration.

### DESCRIPTION OF THE DRAWINGS

One or more embodiments are described below in the Detailed Description section with reference to the following drawings.
FIGS. 1A and 1B present systems configured for various communications between an electric vehicle and a charging station, in accordance with one or more embodiments.
FIG. 2 presents an example computer-implemented method of implementing location specific operation of an EV regarding location of an EVSE, in accordance with an embodiment
FIG. 3 presents an example computer-implemented method for enabling BPT between an EV and a EVSE as a function of the EV has the correct location code for BPT operation with the EVSE, in accordance with an embodiment.
FIG. 4 presents an example computer-implemented method for enabling BPT between an EV and a EVSE as a function of the EV has the correct location code for BPT operation with the EVSE, in accordance with an embodiment.
FIG. 5 presents an example computer-implemented method for enabling BPT between an EV and a EVSE as a function of the EV has the correct location code for BPT operation with the EVSE, in accordance with an embodiment.
FIG. 6 presents an example computer-implemented method of controlling/limiting power discharge from an EV, in accordance with an embodiment.
FIG. 7 presents an example computer-implemented method utilizing a power limit parameter to control a BPT operation, in accordance with an embodiment.
FIG. 8 presents an example computer-implemented method utilizing a power limit parameter to control a BPT operation, in accordance with an embodiment.
FIG. 9 presents an example computer-implemented method utilizing a power limit parameter to control a BPT operation, in accordance with an embodiment.
FIG. 10 presents an example computer-implemented method for determining energy available for discharge between an EV and an EVSE and further implementing a power discharge profile to discharge the available energy, in accordance with an embodiment.
FIG. 11 presents an example computer-implemented method for determining energy available for discharge between an EV and an EVSE and further implementing a power discharge profile to discharge the available energy, in accordance with an embodiment.
FIG. 12 presents an example computer-implemented method for determining energy available for discharge between an EV and an EVSE and further implementing a power discharge profile to discharge the available energy, in accordance with an embodiment.
FIG. 13 presents an example computer-implemented method for utilizing grid codes to enable implementation of a BPT operation at an EV, in accordance with an embodiment.
FIG. 14 presents an example computer-implemented method for utilizing grid codes to enable implementation of a BPT operation at an EV, in accordance with an embodiment.
FIG. 15 presents an example computer-implemented method for utilizing grid codes to enable implementation of a BPT operation at an EV, in accordance with an embodiment.
FIG. 16 presents an example computer-implemented method for utilizing *DSOIDs* to enable implementation of a BPT operation between an EV and a DSO, in accordance with an embodiment.
FIG. 17 presents an example computer-implemented method for utilizing *DSOIDs* to enable implementation of a BPT operation between an EV and a DSO, in accordance with an embodiment.
FIG. 18 presents an example computer-implemented method for utilizing *DSOIDs* to enable implementation of a BPT operation between an EV and a DSO, in accordance with an embodiment.
FIG. 19 presents an example computer-implemented method to enable an electric vehicle cease an active power operation in response to a signal received from a DSO, in accordance with at least one embodiment.
FIG. 20 presents an example computer-implemented method for limiting power discharge at an EV based on a received control signal, in accordance with an embodiment.
FIG. 21 presents an example computer-implemented method for limiting power discharge at an EV based on a received control signal, in accordance with an embodiment.
FIG. 22 presents an example computer-implemented method for limiting power discharge at an EV based on a received control signal, in accordance with an embodiment.
FIG. 23 presents an example computer-implemented method to enable controlling power discharged by an electric vehicle in response to a signal received from a DSO, in accordance with at least one embodiment.
FIG. 24 presents an example computer-implemented method for controlling operation of an EV based on a received limit or setpoint, in accordance with an embodiment.
FIG. 25 presents an example computer-implemented method for controlling operation of an EV based on a received limit or setpoint, in accordance with an embodiment.
FIG. 26 presents an example computer-implemented method for controlling operation of an EV based on a received limit or setpoint, in accordance with an embodiment.
FIG. 27 presents an example computer-implemented method to enable determination of EVSE and EV location based on regional codes received at the EVSE/EV, in accordance with at least one embodiment.
FIG. 28 presents an example computer-implemented method to enable an electric vehicle to function as a generator on an electric grid in accordance with respective specifications/regulations/grid codes required for connection/energy provision to a local grid, in accordance with at least one embodiment.
FIG. 29 presents an example computer-implemented method for ensuring an EV has the correct location code for an EVSE, enabling BPT between the EV and the EVSE, in accordance with an embodiment.
FIG. 30 presents an example computer-implemented method for ensuring an EV has the correct location code for an EVSE, enabling BPT between the EV and the EVSE, in accordance with an embodiment.
FIG. 31 presents an example computer-implemented method for ensuring an EV has the correct location code for an EVSE, enabling BPT between the EV and the EVSE, in accordance with an embodiment.
FIG. 32 presents an example computer-implemented method to enable an EV, connected to an EVSE, to function as a generator for an electric grid in accordance with a requirement to satisfy an observation time, in accordance with at least one embodiment.
FIG. 33 presents an example computer-implemented method to enable an EV, connected to an EVSE, to function as a generator for an electric grid in accordance with a requirement to satisfy an observation time, in accordance with at least one embodiment.
FIG. 34 presents an example computer-implemented method to enable an EV, connected to an EVSE, to function as a generator for an electric grid in accordance with a requirement to satisfy an observation time, in accordance with at least one embodiment.
FIG. 35 presents an example computer-implemented method to enable an EV, connected to an EVSE, to function as a generator for an electric grid in accordance with a requirement to satisfy an observation time, in accordance with at least one embodiment.
FIG. 36 is a block diagram illustrating an example computing environment with which the disclosed subject matter can interact, in accordance with an embodiment.
FIG. 37 is a block diagram illustrating an example computing environment with which the disclosed subject matter can interact, in accordance with an embodiment.

### DETAILED DESCRIPTION

The following detailed description is merely illustrative and is not intended to limit embodiments and/or application or uses of embodiments. Furthermore, there is no intention to be bound by any expressed and/or implied information presented in any of the preceding Background section, Summary section, Abstract, and/or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It is to be understood that when an element is referred to as being "coupled" to another element, it can describe one or more different types of coupling including, but not limited to, chemical coupling, communicative coupling, electrical coupling, electromagnetic coupling, operative coupling, optical coupling, physical coupling, thermal coupling, and/or another type of coupling. Likewise, it is to be understood that when an element is referred to as being "connected" to another element, it can describe one or more different types of connecting including, but not limited to, electrical connecting, electromagnetic connecting, operative connecting, optical connecting, physical connecting, thermal connecting, and/or another type of connecting. As used herein, "data" can comprise metadata. Further, ranges A-n are utilized herein to indicate a respective plurality of devices, components, signals etc., where n is any positive integer. Furthermore, x herein indicates any value greater than zero.

Electric vehicles are powered by an electric motor that draws energy from an onboard battery. The battery can be recharged at any time, e.g., during a journey, while parked for a duration of time (e.g., overnight). The charging operation typically entails connection of the electric vehicle to a charging station via a charging cable plugged into a charging port on the vehicle. Conventionally, when an electric vehicle is connected to the electrical grid, via a charging station, the electric vehicle is charged. However, recent specifications and regulations (e.g., ISO 15118-20) enable implementation of an electric vehicle as a power source/generator, with power discharge from the onboard battery to the electrical grid.

Renewable energy resources such as wind turbines, solar, etc., generate energy, but the energy generation can be weather/situation dependent, e.g., no wind, cloudy/night time, and suchlike. Electric vehicle batteries can be connected to the grid and utilized to store energy during production of excessive renewable energy, and provide the energy to the grid at times when the grid can accommodate/use the energy.

Implementation of the electric vehicle as a generator can be complicated as operation of the electric vehicle as a generator may have to comply with one or more specifications, regulations, etc., implemented at the location of the electric vehicle.

Much like power plants, wind turbines, solar panels, and such like, are regulated with regard to how the respective systems/devices can be connected to the grid, using electric vehicles as power generators are also beholden to such regulations. Further, operation of the electric vehicle as a generator may have to comply with one or more grid codes implemented at the location of the electric vehicle. Hence, while ISO 15118-20 may enable the electric vehicle to operate as a generator, various parameters, information, etc., are to be made available to facilitate compliance with the regulations/local grid codes. Distribution system operators (DSOs) are companies which are distributing electricity and operating in a region. For example, more than one thousand DSOs are operating in Europe and control energy feed/discharge to the electricity grid in the operating area of the DSO. Accordingly, an electric vehicle operating as a generator should be certified according to related grid codes, specifications, etc., implemented in a region of operation and further in compliance with grid codes, specifications, etc., implemented by the DSO overseeing energy discharge to an electrical grid.

### TERMINOLOGY:

BEV: Battery electric vehicle.

BPT: a bidirectional power transfer (BPT) operation performed by an EV connected to an electrical grid (e.g., via an EVSE). The BPT operation can comprise discharge of electrical power from the electrical grid to the EV (e.g., charging of a battery onboard the EV, or discharge of electrical power from the EV (e.g., discharging of electrical energy from the onboard battery) to the electrical grid (a.k.a. a V2G operation). As further mentioned, protection relays, and the like (e.g., at the EVSE or the EV), can be utilized to disconnect the EV from the electrical grid in the event of scheduled termination of charging, protecting equipment/hardware in any of the EV, EVSE, electrical grid, etc., (e.g., during an overvoltage event, an undervoltage event, a charging abnormality, an islanding event, and the like). BPT can also occur between the EV and a house-based/local grid, wherein energy can be transferred between the EV and the house-based/local grid, a.k.a. V2H. It is to be appreciated that while various embodiments presented herein pertain to V2G operation, the embodiments are also applicable to a V2H configuration. V2H can include any suitable configuration, such as the EV is connected to the home-based grid and the remote electrical grid (a.k.a. "grid tied") via the EVSE, EV is connected only to the home-based grid via the EVSE (a.k.a. "islanded"), or any other applicable configuration.

CENELEC and EN standards: is the European Committee for Electrotechnical Standardization (CENELEC), an association bringing together the National Electrotechnical Committees of various European countries, and issues the European Standards "*EN XXXX*"*.*

CSN: Commonwealth Standards Network is an organization promoting participation, adoption, and implementation of international standards. International standards can be developed based on existing standards such as ISO, IEC, etc.

DER: Distributed energy resource is a small-scale unit of power generation that operates local to a site of electrical use, and can be further connected to a larger power grid at the distribution level. DERs can include electric vehicles, solar panels, etc. A DER function bitmap can list the respective specification parameters, grid codes, etc., that can be utilized by the EV to enable a BPT operation.

DSO: Distribution system operators (DSOs) are companies which are distributing electricity and operating in a region. DSOs and TSOs are referred to interchangeably herein. DSOs can control/oversee operation of an electrical grid, and further control implementation of respective specifications, requirements, grid codes, etc., at the electrical grid. The electrical grid can be configured to conduct a BPT operation.

EV: Electric vehicle, having an onboard battery configured to power the electric vehicle (e.g., power a motor configured to propel the EV), where the battery can be charged (e.g., via an EVSE) and also discharged (e.g., via an EVSE).

EVSE: Electric Vehicle Supply Equipment comprising conductors, including the phase(s), neutral and protective earth conductors, the EV couplers, attached plugs, protection relays, and all other accessories, devices, power outlets, apparatuses, hardware installed specifically for the purpose of delivering energy from the premises wiring to the EV and allowing communication between them as necessary.

ENTSO-E: European Network of Transmission System Operators for Electricity, representing transmission system operators (TSOs) across the European continent. In an example scenario of operation ENTSO-E can utilize an Energy Identification Coding (EIC) scheme to identify respective ENTSO-E participants, where such participants can include DSO's, TSO's, and the like.

GRID CODE: a grid code is a technical specification defining parameters that a system connected to a public electric grid has to meet to ensure safe, secure, and economic functioning of the electric system. The system can be an electricity generating plant, a consumer, or another network. The grid code is specified by an authority responsible for the system integrity and network operation. Elaboration of a grid code typically implicates network operators (e.g., DSOs, TSOs), representatives of users and, to an extent varying between countries and regulating bodies. In an example scenario of operation, a grid code can be configured with one or more parameters that have to be complied with by an EV connected to the electrical system (e.g., comprising an EVSE connected to an electric grid), to enable the EV to perform a BPT operation (e.g., V2G operation) with the electrical system.

IEC: International Electrotechnical Commission (*Commission électrotechnique internationale*) is a Swiss-based international standards organization for electrotechnology, electrical, electronic, and related technologies.

ISO: International Organization for Standardization, a Swiss-based organization developing standards for multiple industries, food safety, healthcare, and suchlike.

Islanding: islanding relates to a situation where a section of the distribution network, containing generating plants, becomes physically disconnected from the rest of distribution network and one or more generating units maintain a supply of electrical energy to the isolated section of the distribution network (e.g., per EN 50549-1:2019).

PHEV: plug-in hybrid electric vehicle

VDE: (*Verband der Elektrotechnik, Elektronik und Informationstechnik,* the Association for Electrical, Electronic & Information Technologies) is a German-based technical-specification association concerned with developing electrical safety standards. VDE conduct standardization work, product testing, and product certification.

### STANDARDS/SPECIFICATIONS

It is to be appreciated that while the following presents various specifications/regulations directed towards energy transfer, the various embodiments are not so limited and the various embodiments presented herein can be utilized with any pertinent specification/regulation. Further, where a specification, regulation, etc., is mentioned, the pertinent terms, text, parameters, etc., in the respective specification apply to the respective embodiment presented herein. Further, the terms specification, regulation, protocol, and the like, are used interchangeably herein. Furthermore, while a specific specification, regulation, and the like, may be presented herein, the various embodiments are pertinent to any current, prior, future specification, regulation, and the like disclosing regulations, specifications, and the like comparable/similar to the specific specification presented in an example embodiment/example implementation. The various embodiments are also pertinent to any amendment to an existing specification. Further, while the example specifications presented herein may pertain to a particular geographic region (e.g., a European specification is presented), the embodiments are not so limited and are applicable to any specification used/implemented at any geographic region.

### A. ISO 15118-20:2022

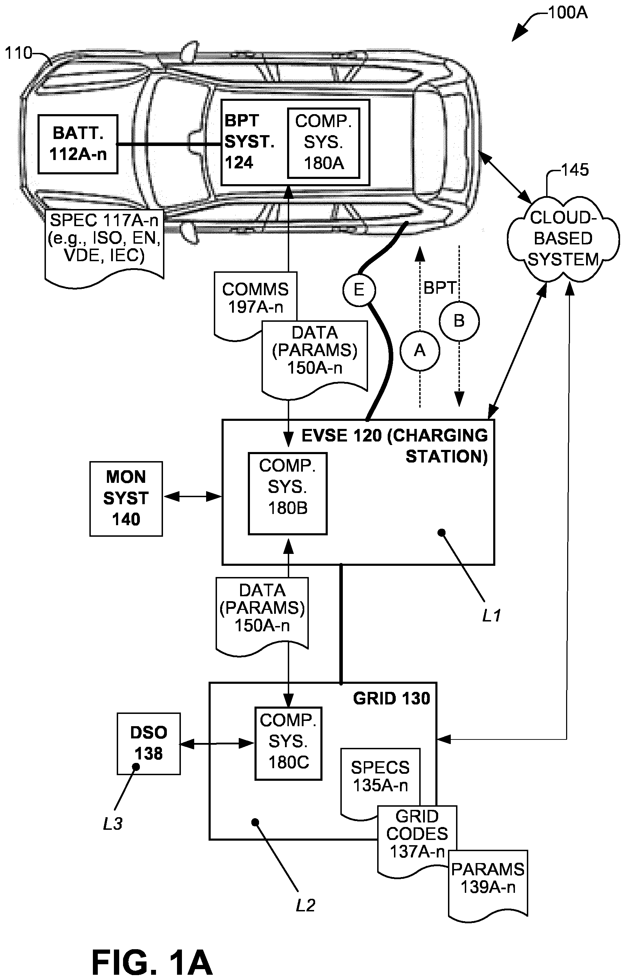

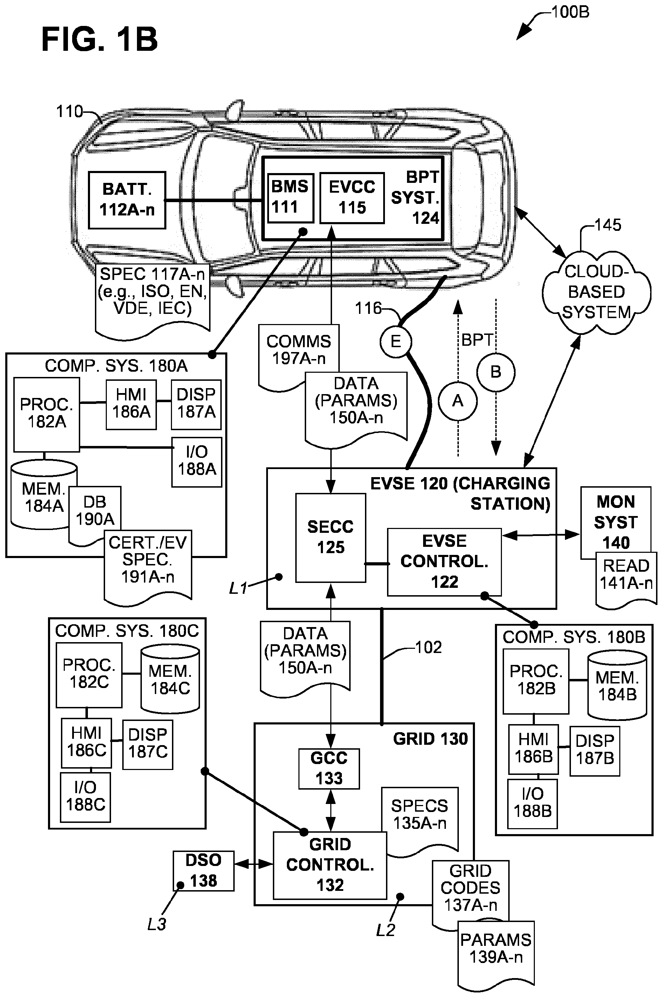

*ISO 15118-20:2022 Road Vehicles* is a specification regarding communication(s) between an EV and an EVSE. Under ISO 15118-20, EVs include BEVs and PHEVs. ISO 15118-20 details communication between an electric vehicle communication controller (EVCC) (e.g., located on the EV) and a supply equipment communication controller (SECC) (e.g., located on the EVSE). Aspects are specified to detect a vehicle in a communication network and enable an Internet Protocol (IP) based communication between the EVCC and the SECC, per FIG. 1 (as described further below).

### B. VDE-AR-n 4105

Specification *VDE-AR-n 4105* pertains to power generation systems connected to the low-voltage distribution network, and in particular, provides technical minimum requirements for the connection to and parallel operation with low-voltage distribution networks. Specification *VDE-AR-n 4105* defines functions and parameters for the safe and reliable network operation, e.g., regarding voltage, frequency, etc., to prevent damage to one or more components located at the EV, the EVSE, the electrical grid, etc., during BPT/V2G operation.

### C. EN 50549-1

Specification *EN 50549-1* details requirements for electrical generating plants to be connected in parallel with electrical distribution networks. Further, Part 1 relates to connection to a Low Voltage (LV) distribution network, in particular, electrical generating plants up to and including Type B. CSN develops and manages EN 50549-1.

### D. ISO 3166-2

ISO 3166-2 is presented herein with regard to utilizing *Subdivision codes* identifying a location of an EVSE, wherein the location can be based on the *Subdivision codes* identifying respective countries, subdivisions (e.g., provinces or states), etc., wherein ISO 3166-2 is known as *Codes for the representation of names of countries and their subdivisions - Part 2: Country subdivision code.*

### E. IEC 61851-1

IEC 61851 is a standard pertaining to EV conductive charging systems.

### BIDIRECTIONAL POWER TRANSFER and ISO 15118-20

The ISO 15118-20 standard includes a Bidirectional Power Transfer (BPT) feature, whereby an EV can receive energy from the grid via an EVSE but can also act as an energy source/generator feeding energy back into the grid via the EVSE. An EV acting as an energy source/generator for energy fed back into the grad is also known as vehicle-to-grid, vehicle2grid, V2G. It is to be appreciated that depending upon the intended energy flow between the EV and the EVSE, the terms BPT, V2G, and the like are used interchangeably herein.

**FIGS. 1A** **and** **1B****,** systems 100A and 100B illustrate communications and operations performed between a vehicle and a charging station, in accordance with one or more embodiments.

As shown in FIG. 1A, a vehicle 110, e.g., an electric vehicle 110 is connected to an EVSE 120, whereby a BPT operation can be performed, e.g., transferring energy (depicted as energy E) from either an electrical grid 130 to a battery 112 located onboard vehicle 110 (battery charging), or from the battery 112A-n to the grid 130 (battery discharging, V2G). A BPT system 124 located on vehicle 110 can be configured to control implementation and operation of a BPT operation between EV 110 and EVSE 120/grid 130. Operation of grid 130, and BPT operations performed with grid 130, can be controlled/overseen by a DSO 138. Further, a monitoring system 140 can be configured to monitor flow of electrical energy between any of grid 130, EVSE 120, and EV 110/battery 112. As further described, various gridcodes 137A-n, specifications 117A-n/135A-n, parameters 139A-n, data/parameters 150A-n, etc., can be implemented and/or exchanged across the system 100A and 100B to enable one or more BPT operations. In an aspect, the respective gridcodes 137A-*n*, specifications 117A-n/135A-n, parameters 139A-n, data/parameters 150A-n, etc., can be based on a location of EVSE 120 (e.g., geographic location *L1),* location of grid 130 (e.g., location *L2*), DSO 138 (e.g., location *L3*), and the like. Further, the respective gridcodes 137A-*n*, specifications 117A-n/135A-n, parameters 139A-n, data/parameters 150A-n, etc., can be shared in one or more communications 197A-n, with sharing, storing, implementation of the respective gridcodes 137A-n, etc., being generated by/provided by/received from any system (e.g., computer systems 180A-n and associated systems/components, as further described) operating at the grid 130, EVSE 120, EV 110, a cloud based system 145, etc. As shown, and further described, each of the respective systems, e.g., grid 130, EVSE 120, EV 110, cloud based system 145, etc., can include a respective computer system 180A-n.

As further shown in FIGS. 1A and 1B, EV 110 is connected to EVSE 120 (a.k.a. a charging station, a wallbox, and the like). Transmission of electrical energy between the EV 110 and the EVSE 120 can be via charging cable 116. EVSE 120 is further connected to electrical energy grid 130, e.g., via power line(s) 102. Charging cable 116 can be connected to EV 110 via a plug (not shown), wherein the plug can be configured based on J1772, Combined Charging System (CCS), SAE Combo, Charge de Move (CHAdeMO), TESLA^{®}, and suchlike. Batteries 112 are located at/onboard EV 110. Charging of the batteries 112 can be controlled by a battery management system (BMS) 111, wherein the BMS 111 can be configured to operate in conjunction with BPT system 124 with various data 150A-n (e.g., commands, instructions, parameters, functions, setpoints, control limits, timings, and respective settings/values, and the like) being communicated between the BMS 111, BPT system 124, and the EVSE 120. As previously mentioned, communications can be conducted between electric vehicle communication controller (EVCC 115) and supply equipment communication controller (SECC) 125. It is to be appreciated that the terms parameters, functions, etc., are used interchangeably and data 150A-n can comprise a parameter, function, etc., and also a value/setting for the particular parameter, function, etc. As shown, BMS 111 and EVCC 115 can be included in BPT system 124, whereby BPT system 124 can include the respective components and functionality to perform/implement the various BPT/V2G operations at EV 110, presented herein.

EVSE 120 can include a EVSE controller system 122 configured to control operation of the EVSE 120. EVSE 120 can further include SECC 125, communicatively coupled to EVSE controller system 122 and further to EVCC 115 and a grid communication controller (GCC) 133. GCC 133 is communicatively coupled to a grid controller component 132 configured to control operation of grid 130 (e.g., in operational compliance with specifications 135A-n and grid codes 137A-n. Data 150A-n can be generated, transmitted, received, and/or processed by any of EVCC 115, SECC 125, and/or GCC 133, as required for operation of EV110 as a generator in compliance with the respective specifications 135A-n and grid codes 137A-n.

At the initiation of/during charging, various operating checks and handshakes (e.g., regarding charging protocols and conditions) between EVSE 120 and BMS 111 can be initiated/completed (e.g., based upon any of level 1 charging (110-120V), level 2 charging (220-240V), level 3 (400V+) DC fast charging, AC charging, DC charging, battery voltage limit, battery current limit, battery capacity, battery condition, battery deterioration, battery temperature, charge slow down rate, charger capacity, ramping up charging, ramping down charging, charging decay, and the like) and charging has commenced. EVSE 120 can be a home charging system (e.g., EVSE 120 is located at a home garage), a public charging station comprising one or more charging stations (e.g., EVSE 120 is one of many charging stations located in the public charging station), etc.

As shown, per implementation of standard ISO 15118-20, BPT can be conducted between EV 110 and EVSE 120. Conventionally, charging of EV 110 would be conducted via energy flow along charging cable 116 in direction A, whereby batteries 112 located at/onboard EV 110 undergo charging. With the implementation of BPT, EV 110 can function as the energy generator/energy source, with energy flow occurring along charging cable 116 in direction B (also known as vehicle-to-grid, vehicle2grid, V2G).

Over the years, in lockstep with the development of charging EVs 110, from grid 130, via EVSE 120, various specifications 135A-*n* (aka regulations) have been developed to ensure a safe charging operation between EV 110 and EVSE 120 in direction A, and furthermore, safe operation of grid 130 with EV 110 connected to EVSE 120. However, with the implementation of BPT, with EV 110/batteries 112 operating as an energy source/generator, connection and electrical charging from EV 110 to EVSE 120 in direction B has to also be in compliance with the respective specifications 135A-*n*. Also, grid codes 137A-*n* may also be in place at the grid 130, with which energy generation from EV 110 has to comply. To facilitate compliance with respective specifications 135A-*n*/grid codes 137A-n, data 150A-*n* can be transmitted respectively between EV 110 and EVSE 120, wherein data 150A-n can comprise respective instructions, messages, parameters, values, etc., as required. Data 150A-n can be transmitted by any suitable means, e.g., wi-fi, short wave, internet, etc.

As further shown in FIG. 1B, a monitoring system, real-time energy meter 140, and the like, can be connected to the EVSE 120 to facilitate monitoring (e.g., realtime feedback) of transfer of electric power to the grid 130, and the like. Accordingly, charging/discharging of EV 110 at EVSE 120, the charging operation can be monitored, e.g., in accordance with a specification 135A-*n*/grid codes 137A-*n*, to detect, for example, over- and undervoltage. In an embodiment, specification 135A-*n* can be *VDE-AR-n 4105.* In accordance with the embodiment, by adding VDE-AR-*n* 4105-related signals into ISO 15118-20 communications between the EV 110 and the EVSE 120, it is possible to classify the EV 110 as a generator under VDE-AR-n 4105, wherein operation of the EV 110 can be classified independent of the EVSE 120. Accordingly, in the event of an issue arises regarding the power generated by the EV 110, per VDE-AR-n 4105, the EV 110 can be disconnected from the EVSE 120 to prevent damage to grid 130.

As further shown in FIG. 1B, BMS 111, EVSE controller 122, and grid controller 132 can be respectively communicatively coupled to a computer systems 180A-*n*. Computer system 180A-*n* can include a respective memory 184A-*n* configured to store the respective computer executable components (e.g., EVCC 115, SECC 125, GCC 133, and suchlike) and further, a respective processor 182A-*n* configured to execute the computer executable components stored in the memory 184A-*n*. Memory 184A-*n* can further be configured to store any of data 150A-*n*, specifications 117A-*n*, specifications 135A-*n*, grid codes 137A-*n*, data/parameters 139A-*n*, data/parameters 150A-*n* (e.g., location codes, *SubDivision* codes, power limit parameters, power discharge profiles, and suchlike), etc. The computer systems 180A-*n* can further respectively include a human machine interface (HMI) 186A-*n* (e.g., a display, a graphical-user interface (GUI)) which can be configured to present various information including the data 150A-*n*, specification 117, specifications 135A-*n*, grid codes 137A-*n*, and suchlike, per the various embodiments presented herein. HMIs 186A-*n* can include an interactive display/screen 187A-*n* to present the various information. Computer systems 180A-*n* can further include respective I/O components 188A-*n* to receive and/or transmit data 150A-*n* (wherein the data can include the respective messages/communications 197A-*n* presented herein).

Transfer of computer code, parameters 139A-n/150A-*n*, settings, specifications 117A-n/135A-*n*, grid codes 137A-*n*, notifications/communications 197A-*n*, etc., can be by any suitable technology/systems, for example, between any of grid 130 (e.g., GCC 133), EVSE 120 (e.g., SECC 125), EV 110 (e.g., EVCC 115), and further grid codes 137A-*n*, etc., can be transmitted to, received from, generated at, and the like by communication with a cloud-based server system 145. In an aspect, the cloud-based server system 145 can be operated by the manufacturer of EV 110, enabling parameters 139A-*n*/150A-*n*, codes 137A-*n*, etc., to be generated at the server system 145 and forwarded to one or more EVs 110A-*n,* where the EVs *110A-n* have undergone certification/re-certification in accordance with a specification, e.g., ISO-, EN-, VDE-, IEC-, and the like. Hence, rather than the respective owners of the various EVs *110A-n* having to maintain a list of specifications 117A-*n* with which their respective EV *110A-n* is to be in compliance with, the manufacturer can generate the respective data *150A-n* and transmit the data 150A-*n* to the respective EV *110A-n* for automatic updating of the respective specifications 117A-*n*, gridcodes 137A-*n*, etc., at the EV *110A-n.*

With a high-level overview, operating EV 110 in a V2G manner can be based on four stages:
Step 1: EV 110 sends a *ServiceDiscovery* request message 197A-*n*/150A-*n* to EVSE 120, whereupon the EVSE 120 can identify respective charging features available at EVSE 120, (e.g., alternating current, direct current, etc.). Similarly, the EVSE 120 can send a message 197B to the EV 110, whereupon, in response, the EV 110 can disclose to the EVSE 120 the respective charging features available at the EV 110. Accordingly, EV 110 and EVSE 120 can conduct a series of message exchanges 197A-*n* whereby EV 110 and EVSE 120 disclose to each other their respective charging features, capabilities, and the like.
Step 2: EV 110 and EVSE 120 can exchange respective technical info/limits regarding BPT (charging/discharging) via a *ChargeParameterDiscovery* request and response message pair (e.g., in data 150A-*n*).
Step 3: based on the respective charging and discharging information, either of the EV 110 or the EVSE 120 can calculate a power profile, wherein a positive power value indicates charging energy and a negative power value indicates a discharging energy. A power discharge profile 150A generated by EV 110 can be shared by EV 110 with the EVSE 120, and a power discharge profile 150B generated by EVSE 120 can be shared by EVSE 120 with the EV 110.
Step 4: during power flow, EV 110 and EVSE 120 can continuously exchange information to enable control of the power flow operation.

In an example embodiment, a *request* message 197A can be sent by the EV 110 and received by the EVSE 120, and a *response* message 197B can be sent by the EVSE 120 and received by the EV 110.

Further, the term *power* can be utilized to indicate a rate of discharge of *energy E* (e.g., from one or more batteries 112A-n), and the term *energy* can be utilized to indicate a volume of energy available (e.g., at one or more batteries 112A-n).

### EMBODIMENTS

Per the foregoing, to enable EV 110 to be classified as a generator per respective specifications 135A-*n* and grid codes 137A-*n,* various parameters, etc. (e.g., in data 150A-*n*), can be added to ISO 15118-20. The following four sections identify respective parameters, signals, etc., to be incorporated into communications between EV 110 and EVSE 120.

### 1. ADDITION OF GRID CODES REGARDING SUBDIVISION REGION INFORMATION TO BE ADDED TO ISO 15118-20

By adding a regional *Subdivision code,* EVSE 120 can be utilized to enable or disable location dependent grid code functions based on the location of the EVSE 120.

For example, a first region in which the EV 110 operates (e.g., when connected to a first EVSE 120A located in the first region having a first *Subdivision code*) may only require one level of protection regarding enabling/disabling a location dependent grid code function (e.g., pertaining to a first grid code 137A). In a second example, a second region in which the EV 110 operates (e.g., when connected to a second EVSE 120B located in the second region having a second *Subdivision code*) may require three levels of protection regarding enabling/disabling a location dependent grid code function (e.g., pertaining to a second grid code 137B). Accordingly, by knowing the requirements of the respective region of operation, the EV 110 can be configured to automatically determine what parameters are required to enable the EV 110 to be certified according to one or more regulations 135A-*n* and/or grid codes 137A-n pertaining to a region where the EV 110 is located (e.g., connected to EVSE 120A at the first region having the first *Subdivision code,* connected to EVSE 120B at the second region having the second *Subdivision code,* and the like), wherein the regulations/grid codes can be utilized to assist in determining whether EV 110 can be classified/function as a generator or not.

In an embodiment, when initiating communications in accordance with ISO15118-20 between the EVSE 120 and EV 110, in the *ServiceDetailResponse* message (e.g., data 150A-n) from the EVSE 120 to the EV 110, the message, e.g., per Example Code 1 below, can include a *SubDivision* code (e.g., per ISO 3166-2) identifying the location of the EVSE 120 and thus EV 110:

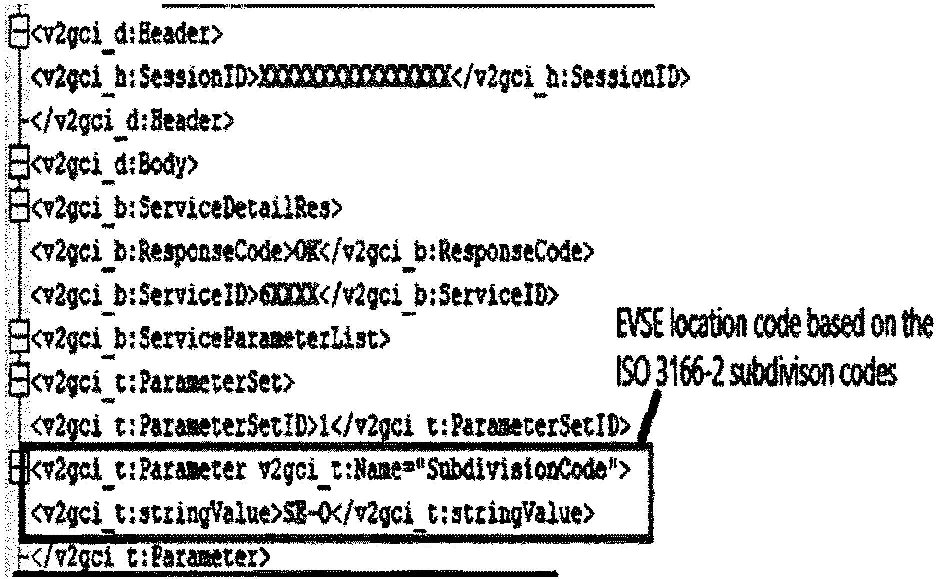

**EXAMPLE CODE 1:** A *ServiceDetailResponse* message (e.g., data 150A-n) from the EVSE 120 to the EV 110, message can include a *SubDivision* code (e.g., per ISO 3166-2) identifying location of EVSE 120 and thus EV 110.

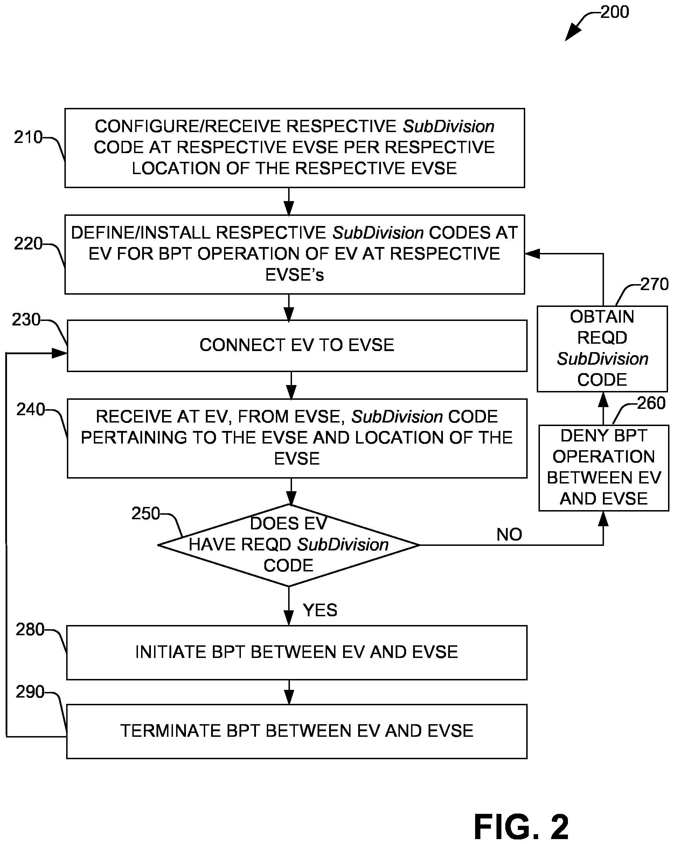

**FIG. 2****,** via flowchart 200, presents an example computer-implemented method of implementing location specific operation of an EV regarding location of an EVSE, in accordance with an embodiment.

At 210, method 200 can comprise of a *SubDivision* code (e.g., in data 150A-n) being configured/implemented at an EVSE (e.g., EVSE 120), whereby the EVSE is installed and operated at a known location. Per the foregoing, a first EVSE is located at a first location, wherein implementation of V2G operations at the first EVSE are to be in accordance with a first specification, first set of grid codes 137A, etc., to comply with operation of a grid 130/DSO 138 to which the first EVSE 120 is coupled (e.g., where the first set of grid codes can comprise at least one grid code 137A-*n*).

At 220, one or more *SubDivsion* codes can be defined/predefined for, stored at, the EV 110, wherein the one or more *SubDivsion* codes identify one or more respective locations/EVSE locations at which V2G can be performed for the EV. The *SubDivision* codes can be maintained in a database 190A (a.k.a. a whitelist, further described in Section 5). The predefined, and/or stored list, of supported *SubDivision* codes is based on geographic regions for which the grid code 137A-*n* requirements are needed/implemented, whereby the geographic region can be defined by the respective grid code 137A-*n* implemented at a particular grid 130 connected to the EVSE 120 coupled to EV 110. Accordingly, a *SubDivision* code is utilized to ensure charging at a particular region (in accordance with the requisite grid code 137A-n) is supported at the EV 110.

At 230, method 100 can further comprise connection of the EV (e.g., EV 110) to the EVSE, with the intent of V2G operations are performed with the EV supplying power to the grid. Connection between the EV and the EVSE can be via any suitable technology (e.g., via cable 116).

At 240, during connection of the EV to the EVSE communications and handshakes can occur, wherein a communication comprises the EVSE transmitting the *SubDivsion* code for the EVSE location to the EV. In an embodiment, the *SubDivsion* code can be configured with any suitable identifier, etc., to facilitate confirmation of a correct *SubDivision* code is being complied with, e.g., most recent version number, a time stamp of creation of the *SubDivision* code, a time stamp/period for which the *SubDivision* code is valid, and the like.

At 250, upon receipt of the *SubDivision* code, the EV can be configured to determine whether the EV is authorized to function as a V2G generator at the location stipulated in the *SubDivision* code. At 250, in response to a determination that NO, the EV does not have the required *SubDivision* code, or the version of the *SubDivision* code installed on the EV is not valid, the EV can be configured to transmit a notification that the *SubDivision* code is invalid, etc., method 100 can advance to step 260, whereupon the EVSE can be configured to deny implementation for the EV in BPT/V2G operation at the EVSE/grid.

At 270, one or more subsequent operations can be performed, e.g., owner/operator of the EV obtains the required *SubDivision* code (e.g., via cloud communication with cloud-based server 145, wherein the required *SubDivision* code has been received from the DSO 138/operator of grid 130).

At 250, in response to a determination that YES, the EV has the required *SubDivision* code, the EVSE can be configured to implement V2G operation with the EV/onboard battery 112.

At 280, BPT operation can be performed until terminated, e.g., whereby termination occurs as a result of disconnection of the EV from the EVSE, a specified V2G charging duration has expired, a V2G charging criteria has been met (e.g., minimum charge level of the battery 112 has been reached), and the like.

At 290, upon termination of BPT operation between the EV and the EVSE, method 200 can return to step 230, whereupon the EV can be connected to an EVSE, wherein the EVSE can be a first EVSE to which the EV was initially connected to at a first location, or a second EVSE at a second location to which the EV has been relocated.

In a non-limiting example of operation, EVSE 120 can be configured with the respective *SubDivsion* code implemented thereon.

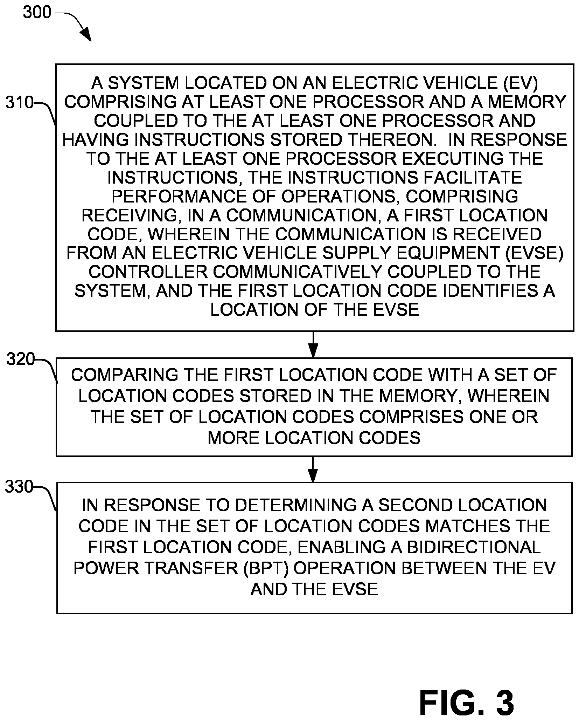

**FIG. 3****,** via flowchart 300, presents a computer-implemented method for enabling BPT between an EV and a EVSE as a function of the EV has the correct location code for BPT operation with the EVSE, in accordance with an embodiment.

At 310, the method can comprise a system (e.g., BPT system 124 comprising EVCC 115 and BMS 111), located on an electric vehicle (e.g., EV 110), comprising at least one processor (e.g., processor 182A-*n*) and a memory (e.g., memory 184A-*n*) coupled to the at least one processor and having instructions stored thereon. In response to the at least one processor executing the instructions, the instructions facilitate performance of operations, comprising receiving, in a communication (e.g., communication 197A-*n*), a first location code (e.g., location code 150A for location *L1* (or *L2, L3*), wherein the communication is received from an electric vehicle supply equipment controller (e.g., EVSE 120/EVSE controller system 122) communicatively coupled to the system, and the first location code identifies a location (e.g., location *L1)* of the EVSE.

At 320, the method can further comprise comparing the first location code with a set of location codes (e.g., location codes 150B-*n*) stored in the memory, wherein the set of location codes comprises one or more location codes.

At 330; the method can further comprise, in response to determining a second location code (e.g., location code 150B) in the set of location codes matches the first location code (e.g., location code 150A), enabling a bidirectional power transfer (BPT) operation between the EV and the EVSE,

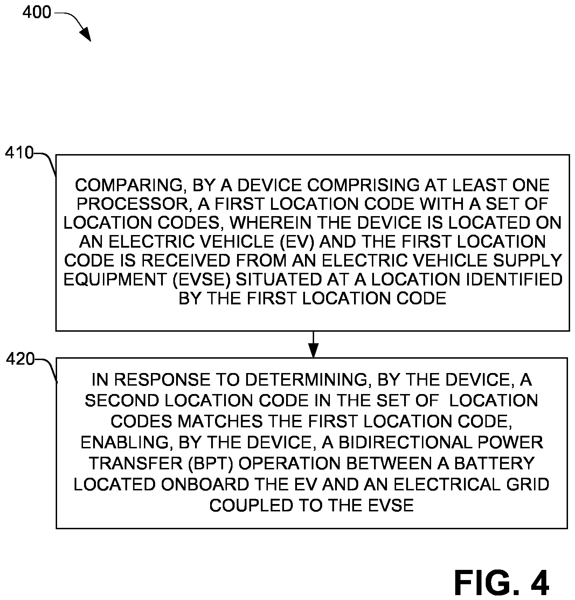

**FIG. 4****,** via flowchart 400, presents a computer-implemented method for enabling BPT between an EV and a EVSE as a function of the EV has the correct location code for BPT operation with the EVSE, in accordance with an embodiment.

At 410, the computer-implemented method can comprise comparing, by a device (e.g., BPT system 124 comprising EVCC 115 and BMS 111) comprising at least one processor (e.g., processor 182A*-n*), a first location code (e.g., location code 150A for location *L1* (or *L2, L3*) with a set of location codes (e.g., location codes 150B-*n*), wherein the device is located on an electric vehicle (e.g., EV 110) and the first location code is received from an electric vehicle supply equipment (e.g., EVSE 120) situated at a location (e.g., location *L1*) identified by the first location code.

At 420, the method can further comprise, in response to determining, by the device, a second location code (e.g., location code 150B) in the set of location codes matches the first location code (e.g., location code 150A), enabling, by the device, a bidirectional power transfer (BPT) operation between a battery (e.g., battery 112) located onboard the EV and an electrical grid (e.g., electrical grid 130) coupled to the EVSE.

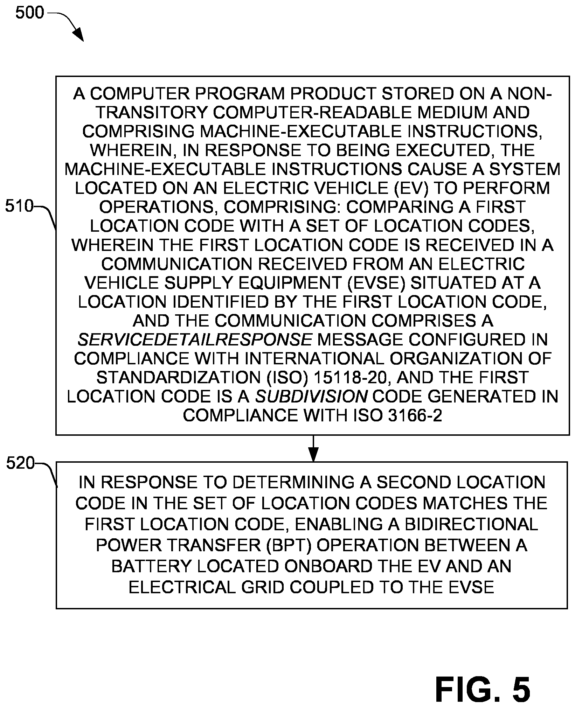

**FIG. 5****,** via flowchart 500, presents a computer-implemented method for enabling BPT between an EV and a EVSE as a function of the EV has the correct location code for BPT operation with the EVSE, in accordance with an embodiment.

At 510, the method can comprise a computer program product stored on a non-transitory computer-readable medium (e.g., memory 184A-n) and comprising machine-executable instructions (e.g., executable by processor 182A-n), wherein, in response to being executed, the machine-executable instructions cause a system (e.g., BPT system 124 comprising EVCC 115 and BMS 111) located on an electric vehicle (e.g., EV 110) to perform operations, comprising: comparing a first location code (e.g., location code 150A) with a set of location codes (e.g., location codes 150B-n), wherein the first location code is received in a communication (e.g., communication 197A-*n*) received from an electric vehicle supply equipment (e.g., EVSE 120) situated at a location (e.g., location *L1*) identified by the first location code, and the communication comprises a *ServiceDetailResponse* message configured in compliance with International Organization of Standardization (ISO) 15118-20 (e.g., in specifications 117A-*n*), and the first location code is a *SubDivision* code generated in compliance with ISO 3166-2 (e.g., in specifications 117A-n).

At 520, the method can further comprise, in response to determining a second location code (e.g., location code 150B) in the set of location codes (e.g., location codes 150B-*n*) matches the first location code (e.g., first location code/*SubDivision* code 150A), enabling a bidirectional power transfer (BPT) operation between a battery (e.g., battery 112) located onboard the EV and an electrical grid (e.g., electrical grid 130) coupled to the EVSE.

### 2. COMPLIANCE OF ISO15118-20 WITH VDE-AR-n-4105 P-monitoring

In another embodiment, during initial/setting up communication between an EV 110 and an EVSE 120, and during a subsequent power transfer operation(s) between the EV 110 and the EVSE 120, communication between the EV 110 (e.g., the EVCC 115) and the EVSE 120 (e.g., SECC 125) can be via any suitable communication specification. In an embodiment, communication between the EV 110 and EVSE 120 can be in compliance with ISO15118-20. Accordingly, per TABLE 1 below, the following parameters can be added to a respective message (e.g., data 150A-*n*) transmitted in a ISO15118-20 communication. In an embodiment, the one or more additional *P-monitoring* (a.k.a. *Pmonitoring*) parameters presented in TABLE 1 can be in accordance with specification VDE-AR-*n* 4105.

**TABLE 1: parameters transmitted in an ISO15118-20 communication**

| **IN MESSAGE (e.g., in ISO15118 msg.)** | **ADDITIONAL PARAMETER 150A-*n*** |
|---|---|
| *ChargeparameterDiscoveryResponse* (a.k.a. *ChargeparameterDiscoveryRes*) | *"PmonitoringDischargePowerLimit"* |
| *ChargeLoopResponse* | "*ExternalMeterPowerValue"* |
| *ChargeLoopResponse* | *"ExternalMeterPowerValue*_*L2"* |
| *ChargeLoopResponse* | *"ExternalMeterPowerValue*_*L3"* |

The *ChargeparameterDiscoveryResponse* parameter is utilized during setup/initiation of BPT operation between the EV 110 and the EVSE 120. The *ChargeLoopResponse* parameter is utilized during BPT operation between the EV 110 and the EVSE 120, wherein respective power values can be obtained from the power meter 140.

*PmonitoringDischargePowerLimit* relates to a limit received from the DSO 138 regarding a maximum power that is to be input to the grid 130 from the EVSE 120. For example, the EVSE 120 may be located at a residence, where the residence also has a separate/second source of energy generation (e.g., solar power array, wind turbine, and the like). Accordingly, the *PmonitoringDischargePowerLimit* defines a maximum energy that should never be exceeded for energy transfer from the EVSE to the grid 130. Hence, readings 141 from the power meter 140 can represent a combination of energy being generated at the residence and the BMS 111 can utilize the readings 141 to control/adjust discharge current from the battery 112/EV 110 such that the combination of first energy from the second energy source (e.g., the solar power array) and the second energy being discharged from the battery 112 does not exceed the defined *PmonitoringDischargePowerLimit.*

*ExternalMeterPowerValue* (e.g., phase 1)*, ExternalMeterPowerValue*_*L2* (e.g., phase 2), and *ExternalMeterPowerValue*_*L3* (e.g., phase 3) are respective power values 141 being measured in real-time at the power meter 140, whereby the respective PowerValues relates to the three phase power generation utilized in Europe. The respective PowerValue readings 141 can be forwarded by the EVSE 120 to the EV 110 to enable the EVCC 115/BMS 111 to control/adjust the discharge current from battery 112 to not exceed the maximum power value defined in *PmonitoringDischargePowerLimit* (e.g., in accordance with other energy sources (e.g., second energy source) connected to the EVSE 120).

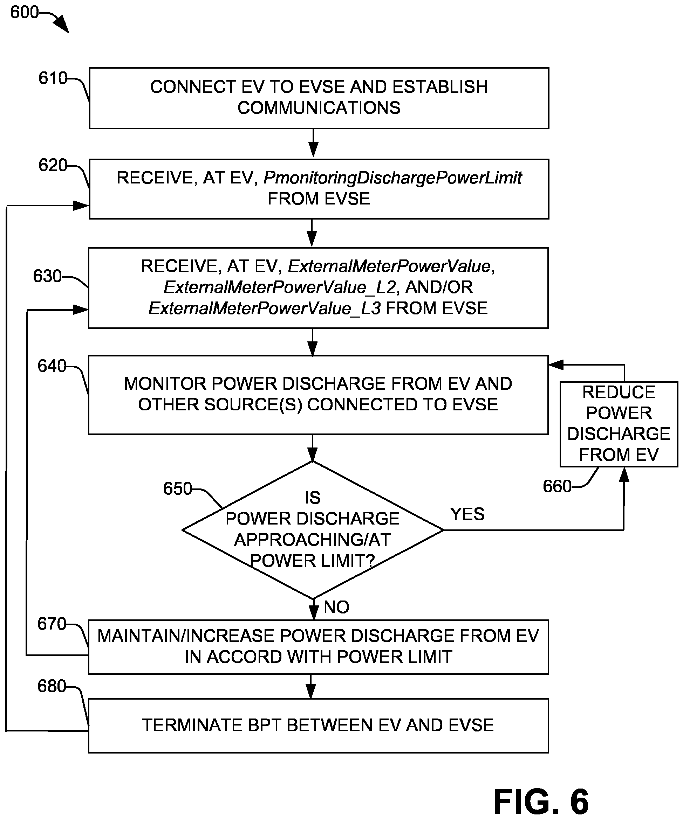

**FIG. 6****,** via flowchart 600, presents an example computer-implemented method of controlling/limiting power discharge from an EV, in accordance with an embodiment.

At 610, method 600 can comprise connection of an EV (e.g., EV 110) to an EVSE (e.g., EVSE 120) with communications/handshakes being initiated (e.g., via cable 116).

At 620, a *PmonitoringDischargePowerLimit* parameter (e.g., parameter 150A) can be received at the EVSE (e.g., from a DSO 138/grid130), wherein the *PmonitoringDischargePowerLimit* defines a maximum power discharge (e.g., energy *E*) from the EVSE to the grid (e.g., grid 130). The EVSE can be further configured to transmit the *PmonitoringDischargePowerLimit* to the EV.

At 630, as previously mentioned, the EVSE may be connected to multiple power sources including the EV. During BPT operation of the EV, the total power discharged from the EVSE to the grid can be monitored in real-time by a power meter (e.g., by the power meter 140) connected to the EVSE. The respective phase measurements (e.g., parameters 150X-Z) *ExternalMeterPowerValue, ExternalMeterPowerValue*_*L2,* and *ExternalMeterPowerValue*_*L3* measured by the power meter can be forwarded from the EVSE to the EV from implementation by the onboard BMS (e.g., BMS 111). The respective power measurements obtained from the power meter can be a combination of the total power discharge generated from the multiple power sources connected to the EVSE, including the EV.

At 640, the BMS can be configured to determine whether the combined power discharge (e.g., per respective real-time phase measurements *ExternalMeterPowerValue, ExternalMeterPowerValue*_*L2,* and *ExternalMeterPowerValue*_*L3*) to the grid is at or approaching the *PmonitoringDischargePowerLimit.*

At 650, in response to a determination by the BMS that YES the combined power discharge is at or approaching the *PmonitoringDischargePowerLimit,* method 300 can advance to step 660, whereupon the BMS can reduce the power discharge from the onboard battery (e.g., battery 112) to prevent the *PmonitoringDischargePowerLimit* being reached/exceeded. With the power discharge from the onboard battery being reduced/controlled, method 600 can return to 640 for further monitoring/control of the power discharge from the onboard battery.

At 650, in response to a determination by the BMS that NO, the power discharge at the EVSE is not at/or approaching the *PmonitoringDischargePowerLimit,* method 600 can advance to step 670, whereupon the BMS can be configured to maintain or increase power discharge from the onboard battery in accordance with the *PmonitoringDischargePowerLimit.* With the power discharge from the onboard battery being maintained/increased/controlled by the BMS, method 600 can return to 630 for further monitoring/control of the power discharge from the onboard battery.

At 680, upon termination of a power discharge, method 600 can return to step 620 for subsequent receipt of *PmonitoringDischargePowerLimit* or perform a subsequent discharge operation.

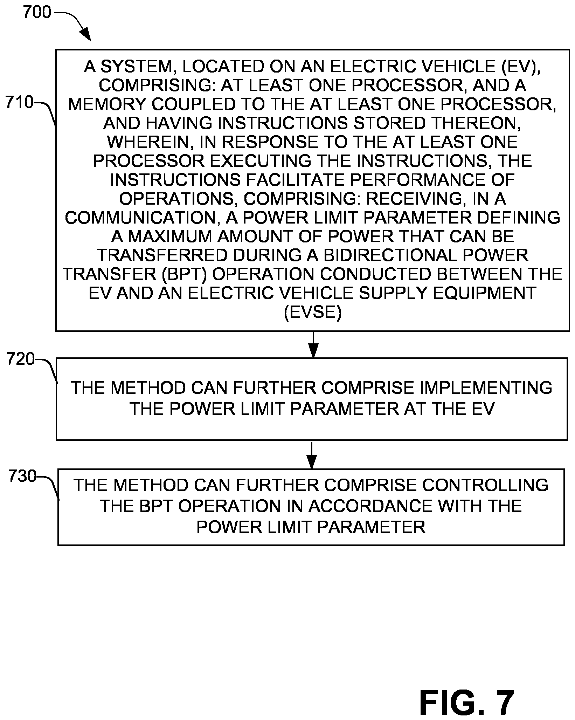

**FIG. 7****,** via flowchart 700, presents a computer-implemented method utilizing a power limit parameter to control a BPT operation, in accordance with an embodiment.

At 710, the method can comprise a system (e.g., BPT system 124 comprising EVCC 115 and BMS 111), located on an electric vehicle (e.g., EV 110), comprising: at least one processor (e.g., processor 182A); and a memory (e.g., memory 184A) coupled to the at least one processor and having instructions stored thereon, wherein, in response to the at least one processor executing the instructions, the instructions facilitate performance of operations, comprising: receiving, in a communication (e.g., communication 197A-*n*), a power limit parameter (e.g., PLP parameter 150A) defining a maximum amount of power that can be transferred during a bidirectional power transfer (BPT) operation conducted between the EV and an electric vehicle supply equipment (e.g., EVSE 120).

At 720, the method can further comprise implementing the power limit parameter at the EV.

At 730, the method can further comprise controlling the BPT operation in accordance with the power limit parameter.

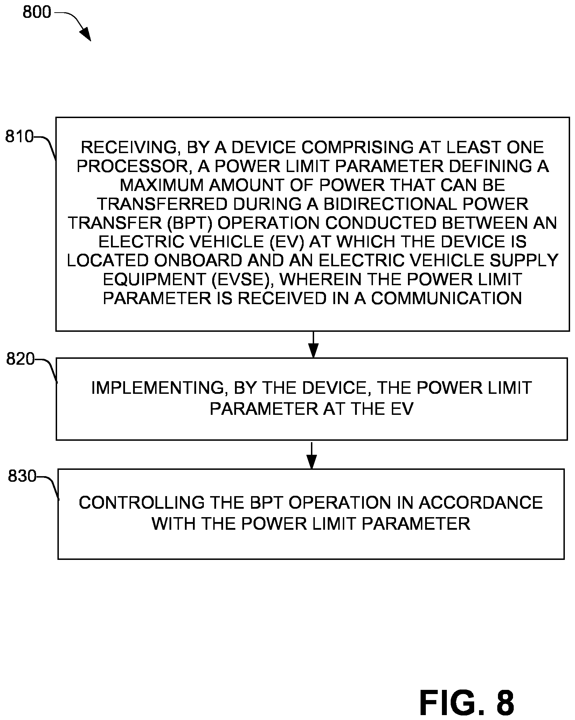

**FIG. 8****,** via flowchart 800, presents a computer-implemented method utilizing a power limit parameter to control a BPT operation, in accordance with an embodiment.

At 810, the method can comprise receiving, by a device (e.g., BPT system 124 comprising EVCC 115 and BMS 111) comprising at least one processor (e.g., processor 182A), a power limit parameter (e.g., PLP parameter 150A) defining a maximum amount of power that can be transferred during a bidirectional power transfer (BPT) operation conducted between an electric vehicle (e.g., EV 110) at which the device is located onboard and an electric vehicle supply equipment (e.g., EVSE 120), wherein the power limit parameter is received in a communication (e.g., communication 197A-n).

At 820, the method can further comprise implementing, by the device, the power limit parameter at the EV.

At 830, the method can further comprise controlling the BPT operation in accordance with the power limit parameter.

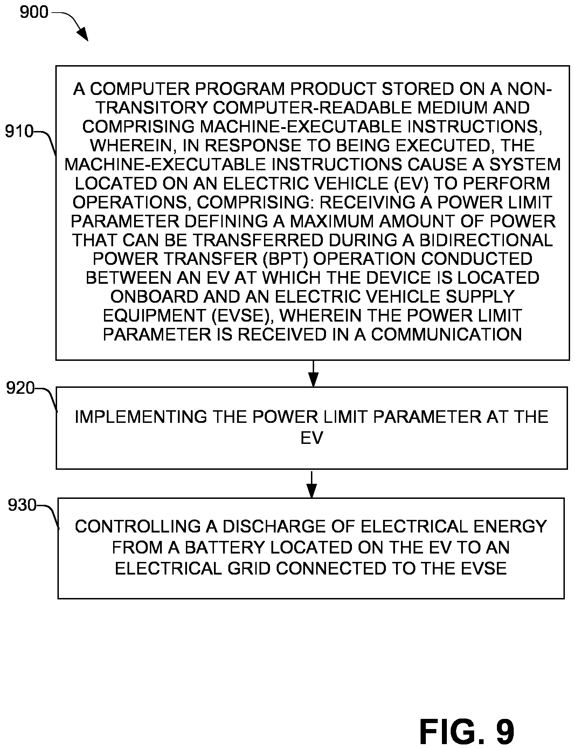

**FIG. 9****,** via flowchart 900, presents a computer-implemented method utilizing a power limit parameter to control a BPT operation, in accordance with an embodiment.

At 910, the method can comprise a computer program product stored on a non-transitory computer-readable medium (e.g., memory 184A-*n*) and comprising machine-executable instructions (e.g., executable by processor 182A-*n*), wherein, in response to being executed, the machine-executable instructions cause a system (e.g., BPT system 124 comprising EVCC 115 and BMS 111) located on an electric vehicle (e.g., EV 110) to perform operations, comprising: receiving a power limit parameter (e.g., PLP parameter 150A) defining a maximum amount of power that can be transferred during a bidirectional power transfer (BPT) operation conducted between the EV at which the device is located onboard and an electric vehicle supply equipment (e.g., EVSE 120), wherein the power limit parameter is received in a communication (e.g., communication 197A-*n*).

At 920, the method can further comprise implementing the power limit parameter at the EV.

At 930, the method can further comprise controlling a discharge of electrical energy from a battery (e.g., battery 112) located on the EV to an electrical grid (e.g., electrical grid 130) connected to the EVSE.

### 3. ADDITION OF SIGNALS INTO ISO 15118-20, PARAMETER: EVSessionTotalDischargeEnergyAvailable (a.k.a., V2XAvailableDischargeEnergy)

In an embodiment, for smart scheduling to be performed by a third actor (e.g., by the operator of grid 130), one or more signals can be added into ISO 15118-20 to transfer information from EV 110 to EVSE 120 (e.g., data 150A-*n*). In an embodiment, the EVSE 120 can be under the control of a third party, e.g., DSO 138, such that the EVSE 120 is functioning in accordance with a specification 117A-*n*, grid code 137A-*n*, and the like, as required for the EV 110 to function as an energy generator for the electrical grid 130. In an embodiment, during communications (e.g., ISO 15118-20-based) between EVSE 120 and EV 110, in the *ChargeLoopRequest* message, the *EVSessionTotalDischargeEnergyAvailable* parameter (e.g., in parameters 150A-n) can be provided by the EV 110 (e.g., from the BMS 111, EVCC 115) to the EVSE 120, and, if required, to the grid 130/DSO 138. In an aspect, the *EVSessionTotalDischargeEnergyAvailable* parameter may also be referred to as the *V2XAvailableDischargeEnergy* parameter.

The *EVSessionTotalDischargeEnergyAvailable* parameter can be of a ComplexType, RationalNumberType, being an optional parameter, defining Total energy value, in watt-hours (Wh), that EV 110 is allowed to provide during the entire V2G session. The value is independent from the V2X Cycling area. Once this value reaches the value of 0, the EV 110 may block any attempt to discharge (the battery) in order to protect the battery health.

In an aspect, to prevent an unlimited discharge of energy from battery 112, an available amount of energy available for discharge from battery 112 can be defined, e.g., to protect battery 112 from aging faster than the owner of the EV 110 desires. The BMS 111 can be configured to determine an amount of energy available for discharge such that in the event of the amount of energy available reaches zero, the BMS 111 can be configured to prevent/terminate power discharge from the onboard battery 112 to EVSE 120.

In an embodiment, EV 110 can report to the EVSE 120 the amount of energy available for discharge at the battery 112, wherein the amount of energy available is provided in the *EVSessionTotalDischargeEnergyAvailable* parameter. During creation, by the EVSE 120, of a power profile to be implemented during a discharge session, the EVSE 120 can utilize the value of the *EVSessionTotalDischargeEnergyAvailable* parameter received from EV 110 to define the power profile. For example, with the EV 110 reporting *EVSessionTotalDischargeEnergyAvailable* = 20kWh, and with EVSE 120 generating a power profile having a duration of 4 hours, the EVSE 120 can generate a power profile with a power discharge of 5kW. Accordingly, the power profile generated by the EVSE 120 is defined to not exceed the *EVSessionTotalDischargeEnergyAvailable* = 20kWh provided by EV 110. The total energy available for discharge, per *EVSessionTotalDischargeEnergyAvailable* parameter, can be accumulated at the grid 130 over a period of time defined for the discharging session, (e.g., 10kWh per day). A discharging session defined by EVSE 120 can be of any defined amount (e.g., 4 hours, 12 hours, 24 hours, a year, over lifetime of battery, and the like).

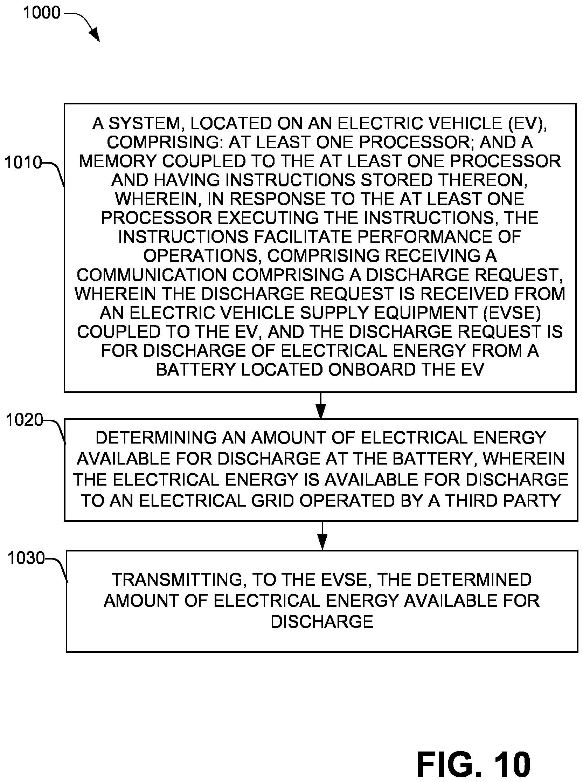

**FIG. 10****,** via flowchart 1000, presents a computer-implemented method for determining energy available for discharge between an EV and an EVSE and further implementing a power discharge profile to discharge the available energy, in accordance with an embodiment.

At 1010, the method can comprise a system (e.g., BPT system 124 comprising EVCC 115 and BMS 111), located on an electric vehicle (e.g., EV 110), comprising: at least one processor (e.g., processor 182A); and a memory (e.g., memory 184A) coupled to the at least one processor and having instructions stored thereon, wherein, in response to the at least one processor executing the instructions, the instructions facilitate performance of operations, comprising receiving a communication (e.g., communication 197A-n) comprising a discharge request, wherein the discharge request is received from an electric vehicle supply equipment (e.g., EVSE 120) coupled to the EV, and the discharge request is for discharge of electrical energy from a battery (e.g., battery 112) located onboard the EV.

At 1020, the method can further comprise determining an amount of electrical energy (e.g., electrical energy E per *EVSessionTotalDischargeEnergyAvailable*) available for discharge at the battery, wherein the electrical energy is available for discharge to an electrical grid (e.g., electrical grid 130) operated by a third party (e.g., DSO 138).

At 1030, the method can further comprise transmitting, to the EVSE, the determined amount of electrical energy available for discharge (e.g., *EVSessionTotalDischargeEnergyAvailable*).

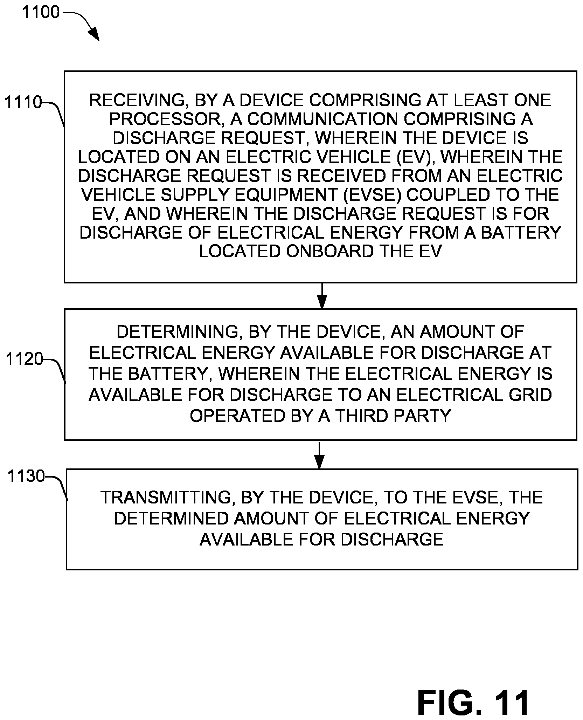

**FIG. 11****,** via flowchart 1100, presents a computer-implemented method for determining energy available for discharge between an EV and an EVSE and further implementing a power discharge profile to discharge the available energy, in accordance with an embodiment.

At 1110, the method can comprise receiving, by a device (e.g., BPT system 124 comprising EVCC 115 and BMS 111) comprising at least one processor (e.g., processor 182A), a communication (e.g., communication 197A-n) comprising a discharge request, wherein the device is located on an electric vehicle (e.g., EV 110), wherein the discharge request is received from an electric vehicle supply equipment (e.g., EVSE 120) coupled to the EV, and wherein the discharge request is for discharge of electrical energy (e.g., energy E) from a battery (e.g., battery 112) located onboard the EV.

At 1120, the method can further comprise determining, by the device, an amount of electrical energy available for discharge at the battery, wherein the electrical energy is available for discharge to an electrical grid (e.g., electrical grid 130) operated by a third party (e.g., DSO 138).

At 1130, the method can further comprise transmitting, by the device, to the EVSE, the determined amount of electrical energy available for discharge.

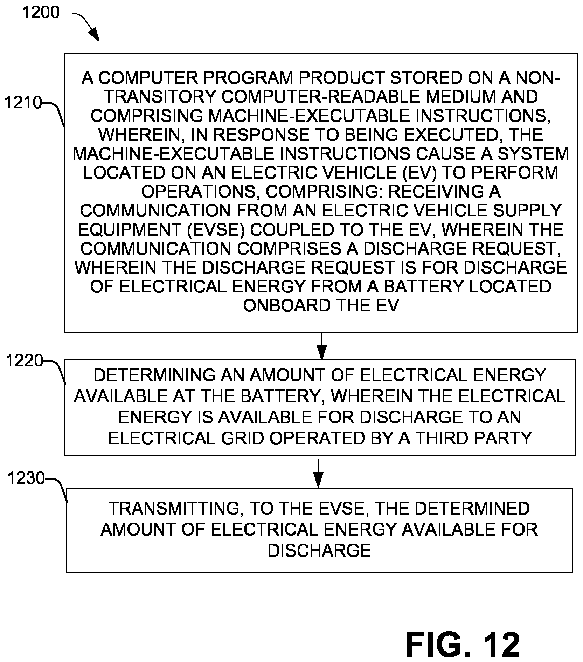

**FIG. 12****,** via flowchart 1200, presents a computer-implemented method for determining energy available for discharge between an EV and an EVSE and further implementing a power discharge profile to discharge the available energy, in accordance with an embodiment.

At 1210, the method can utilize a computer program product stored on a non-transitory computer-readable medium (e.g., memory 184A-n) and comprising machine-executable instructions (e.g., executable by processor 182A-*n*), wherein, in response to being executed, the machine-executable instructions cause a system (e.g., BPT system 124 comprising EVCC 115 and BMS 111) located on an electric vehicle (e.g., EV 110) to perform operations, comprising: receiving a communication (e.g., communication 197A-*n*) from an electric vehicle supply equipment (e.g., EVSE 120) coupled to the EV, wherein the communication comprises a discharge request, wherein the discharge request is for discharge of electrical energy (e.g., energy *E*) from a battery (e.g., battery 112) located onboard the EV.

At 1220, the method can further comprise determining an amount of electrical energy available at the battery, wherein the electrical energy is available for discharge to an electrical grid (e.g., electrical grid 130) operated by a third party (e.g., DSO 138).

At 1230, the method can further comprise transmitting, to the EVSE, the determined amount of electrical energy available for discharge.

### 4. ENABLING COMPLIANCE OF EV AS A GENERATOR UNDER EN50549-1 AND GRID CODES

To enable the transfer of power from EV 110 back to the grid 130, it is required that EV 110 is certified as an electrical generator unit, e.g., under EN50549-1. Further, for EV 110 to function as an electrical generator, EV 110 may be required to function in accordance with local grid codes 137A-*n*. Grid codes 137A-*n* may be different between neighboring regions, and further, the grid codes 137A-*n* implemented in a particular region may be continually updated/revised. Accordingly, for the EV 110 to function as an electrical generator, it is required that EV 110 is informed of the respective grid code(s) 137A-*n* implemented in a region of operation of the EV 110 (e.g., location of EV 110 when functioning as a generator unit). Currently, the communication standard version (ISO 15118-20) relating to charging of an EV 110 is silent regarding the communication of the grid codes 137A-*n* between the EVSE 120 and the EV 110. Accordingly, to enable the EV 110 to be certified/operate as a generator unit (e.g., a vehicle-side generator unit), and compliance with EN50549-1/local grid code(s) 137A-*n*, one or more of the following parameters/criteria 4.1-4.6 should be added to the ISO 15118-20 specification:

4.1. addition of *"Overvoltage 10min mean protection"* parameter settings to be received by EV 110 (e.g., in data 150A*-n*)*.*

Regarding the *Overvoltage 10 min mean protection* parameter/function, in an embodiment, per EN 50549-1 (e.g., section 4.9.3.3. of EN50549-1:2019) the calculation of the 10 min value shall comply with the 10 min aggregation of EN 61000-4-30 Class S, but deviating from EN 61000-4-30 as a moving window is used. Therefore the function shall be based on the calculation of the square root of the arithmetic mean of the squared input values over 10 min. The calculation of a new 10 min value at least every 3 s is sufficient, which is then to be compared with the threshold value. For example:
Threshold (1,0 - 1,15) *Uₙ* adjustable by steps of 0,01 *Uₙ*;
Start time ≤ 3s not adjustable;
Time delay setting = 0 ms.

It is to be noted that the function evaluates the r.m.s value, and further information can be found in EN 50160.

4.2. adding *"anti-islanding disengage time"* parameter settings to be received by EV 110 (e.g., in data 150A-*n*). In an embodiment, per EN 50549-1 (e.g., section 4.9.3.3. of EN50549-1:2019), the disengage time/disengaging time is the duration of the time interval between the instant a specified change is made in the value of the input energizing quantity which will cause the relay to disengage and instant the relay disengages. In an embodiment, the relay can be a protection relay, an interface protection relay, and the like, configured to disengage to protect any of the EV 110, the EVSE 120, the grid 130, and the like from damage.

*4.3. "Overvoltage 10min mean protection"* function added to a DER function bitmap.

*4.4. "P-monitoring"* function added to a DER function bitmap list. The *P-monitoring* function is utilized by a generator (e.g., EV 110) to monitor the power discharged to the grid 130 to ensure the power discharge does not exceed a power discharge limit specified by the DSO 138.

4.5. Enabling/configuring EV 110 to select one or more anti-islanding detection methods. One or more anti-islanding techniques/technologies are available to detect/address an islanding scenario involving EV 110. One or more parameters 150A-*n* can be transmitted to the EV 110 to enable the EV 110 to select an anti-islanding technique/technology to implement, whereby the specific implemented anti-islanding technique/technology can be selected/defined by DSO 138 associated with the EVSE 120 and/or grid 130.

4.6. Add a requirement to the ISO 15118-20 standard regarding ceasing active power discharge/initiate power discharge/adjust power discharge in response to receipt of an instruction/request (e.g., in communication 197A-*n*, parameters 150A-*n*) from the DSO 138 via EVSE 120. In an embodiment, the instruction/request can be a digital input into the EVSE 120, e.g., as further described in Section 6, below.

In an embodiment, EVSE 120 can provide knowledge of the respective parameters listed in 4.1-4.6 above to EV 110 (e.g., data 150A-*n*). In response thereto, EV 110 is required to fulfil requirements according to a given parameter setting to comply with grid code regulations implemented local to a location of EV 110.

Regarding items 4.3 and 4.4 above, a DER function bitmap list can be generated by a software application configured to identify utilization, power output, of respective DERs in a region, and the energy output/demand placed on the DERs. A DER function bitmap can be configured to define a list of functions that should be/are supported by the EV 110 to perform BPT/V2G operations at a given location/particular location of an EVSE 120 to which the EV 110 is connected.

Regarding item 4.5 above, islanding can occur, for example, when during a blackout, EV 110 feeds excess power (e.g., in batteries 112) back into the grid 130, and continues to do so when there is an excess power at the point of generation, e.g., EV 110. Accordingly, EV 110 is a power island in a power grid when the power grid is not delivering power. Islanding can be an issue when a power grid is being brought back online, as it is preferred to bring the grid back on-line in coordinated/defined regions, which the EV 110 island can affect.

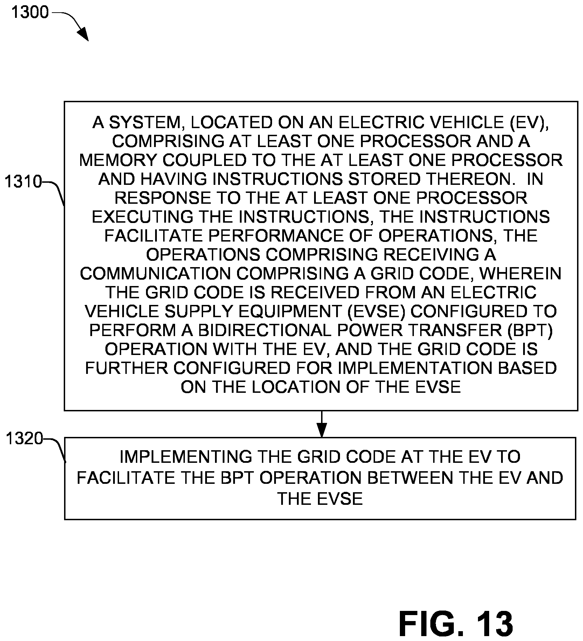

**FIG. 13****,** via flowchart 1300, presents a computer-implemented method for utilizing grid codes to enable implementation of a BPT operation at an EV, in accordance with an embodiment.

At 1310, the method can comprise a system (e.g., BPT system 124 comprising EVCC 115 and BMS 111), located on an electric vehicle (e.g., EV 110), comprising at least one processor (e.g., processor 182A) and a memory (e.g., memory 184A) coupled to the at least one processor and having instructions stored thereon. In response to the at least one processor executing the instructions, the instructions facilitate performance of operations, the operations comprising receiving a communication (e.g., communication 197A-n), comprising a grid code (e.g., grid code 137A), wherein the grid code is received from an electric vehicle supply equipment (e.g., EVSE 120) configured to perform a bidirectional power transfer (BPT) operation with the EV, and the grid code is further configured for implementation based on the location (e.g., location *L1*) of the EVSE.

At 1320, the method can further comprise implementing the grid code at the EV to facilitate the BPT operation between the EV and the EVSE.

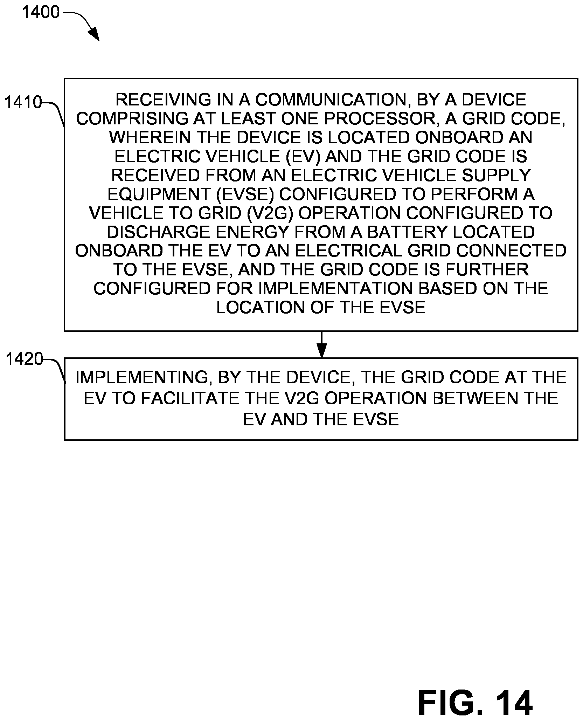

**FIG. 14****,** via flowchart 1400, presents a computer-implemented method for utilizing grid codes to enable implementation of a BPT operation at an EV, in accordance with an embodiment.

At 1410, the method can comprise receiving in a communication, by a device (e.g., BPT system 124 comprising EVCC 115 and BMS 111) comprising at least one processor (e.g., processor 182A), a grid code (e.g., grid code 137A), wherein the device is located onboard an electric vehicle (e.g., EV 110) and the grid code is received from an electric vehicle supply equipment (e.g., EVSE 120) configured to perform a vehicle to grid (V2G) operation configured to discharge energy from a battery (e.g., battery 112) located onboard the EV to an electrical grid (e.g., electrical grid 130) connected to the EVSE, and the grid code is further configured for implementation based on the location of the EVSE.

At 1420, the method can further comprise implementing, by the device, the grid code at the EV to facilitate the V2G operation between the EV and the EVSE.

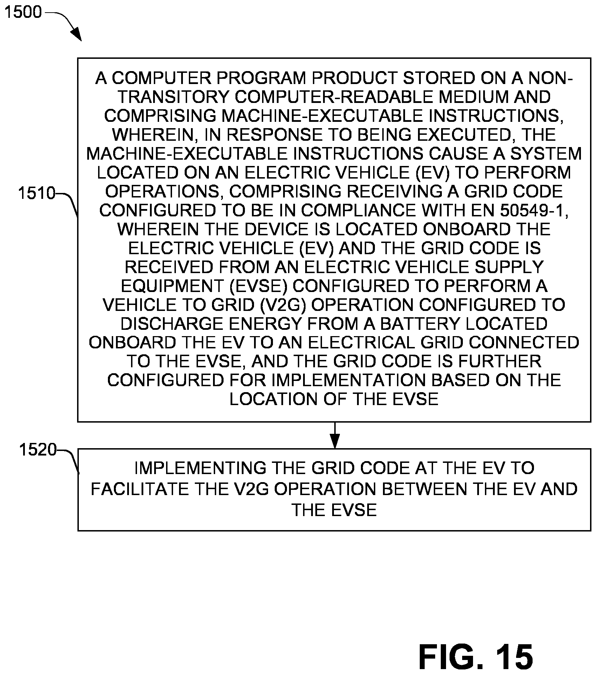

**FIG. 15****,** via flowchart 1500, presents a computer-implemented method for utilizing grid codes to enable implementation of a BPT operation at an EV, in accordance with an embodiment.

At 1510, the method can utilize a computer program product stored on a non-transitory computer-readable medium (e.g., memory 184A-*n*) and comprising machine-executable instructions (e.g., executable by processor 182A-*n*), wherein, in response to being executed, the machine-executable instructions cause a system (e.g., BPT system 124 comprising EVCC 115 and BMS 111) located on an electric vehicle (e.g., EV 110) to perform operations, comprising receiving a grid code (e.g., grid code 137A) configured to be in compliance with EN 50549-1 (e.g., specification 117A), wherein the device is located onboard the electric vehicle (EV) and the grid code is received from an electric vehicle supply equipment (e.g., EVSE 120) configured to perform a vehicle to grid (V2G) operation configured to discharge energy from a battery (e.g., battery 112) located onboard the EV to an electrical grid (e.g., electrical grid 130) connected to the EVSE, and the grid code is further configured for implementation based on the location (e.g., location *L1*) of the EVSE.

At 1520, the method can further comprise implementing the grid code at the EV to facilitate the V2G operation between the EV and the EVSE.

### 5. ADDITION OF SIGNALS INTO ISO 15118-20 - PARAMETER: DSO UNIQUE IDENTIFICATION NUMBER FOR OPERATION AT CURRENT LOCATION

By adding a DSO (Distribution system operator) unique identification number (*DSOID),* EVSE 120 can be utilized to enable or disable discharging functions based on the connected grid operator information of the EVSE 120. The *DSOID* (e.g., in parameters 150A-*n*) enables the EV 110 to determine whether the EV 110 is approved for BPT/V2G operation with the DSO 138 connected to/operating the EVSE 120, and the grid 130.

In an embodiment, when initiating communications in accordance with ISO15118-20 between the EVSE 120 and EV 110, in the *ServiceDetailResponse* message (e.g., in data 150A-n in communication 197A-*n*) from the EVSE 120 to the EV 110, the message can include a *DSOID* code (e.g., an ENTSO-E EIC code, a local unique identifier code, a suitable identification schema, and the like) identifying a DSO 138 controlling BPT operation(s) at the region/location at which EVSE 120, and thus EV 110, are located/operating (e.g., location *L1),* wherein DSO 138 can be stipulating specifications 117A-n, grid codes 137A-*n*, etc., to be complied with during a BPT operation.

For example, as mentioned earlier DSO 138 approval is needed for a generator (e.g., EV 110 and onboard battery 112) to discharge energy to/feed energy back into the grid 130, wherein the BPT operation is a V2G operation. A *DSOID* in the *ServiceDetailResponse* message element (e.g., in a ISO15118-20 communication 197A-*n*) received from the EVSE 120 (and controlling DSO 138) can be used by EV 110 and compared with previously stored *DSOID's* available in an internal whitelist 190A (e.g., stored in memory 184A at EV 110) or cloud based whitelist 190D (e.g., available at a memory 184D at the cloud-based server system 145), wherein the previously stored *DSOID*'s are for DSOs 138A-*n* approved for use by EV 110, enabling the EV 110 to authorize itself to discharge energy in response to a determination that the *DSOID* matches the whitelist 190A-*n* of DSOIDs for approved DSOs 138A-*n* for EV 110.

In an example embodiment, the EV 110 can be certified/approved (e.g., per a certificate 191A-*n*) for use as a generator system with the DSO 138, whereby the EV 110 can undergo certification in accordance with a specification/controlling body, e.g., certified in accordance with EN 50549, and the certification (e.g., certificate 191A-*n*) can be presented to the DSO 138 to enable approval of the EV 110 as a generator by the DSO 138. The EV 110 can also include a specification (e.g., per EV specification 191A-*n*) of supported EV functionality regarding systems, components, devices, etc., located onboard EV 110 and their respective implementation/availability for use in a BPT operation, wherein the specification 191A-n can be utilized as part of approving EV 110 for use in a BPT operation with a DSO 138. Upon approval being received from the DSO 138, the *DSOID* (e.g., *DSOID* 150D) for the DSO 138 can be added to the DSO whitelist 190A stored/available at the EV 110 (e.g., stored in memory 184A).

In another example embodiment, DSO 138 approval for implementation of the EV 110 for V2G operation with the DSO 138 can be performed by the manufacturer of the EV 110, e.g., in conjunction with make and model of the EV 110, onboard batteries 112A-*n*, onboard systems such as BMS 111 and EVCC 115, and the like. The DSOID can be added to the onboard/cloud-based whitelist 190A-*n* during manufacture/sale of the EV 110, and can be further added/updated in an after-sale operation.

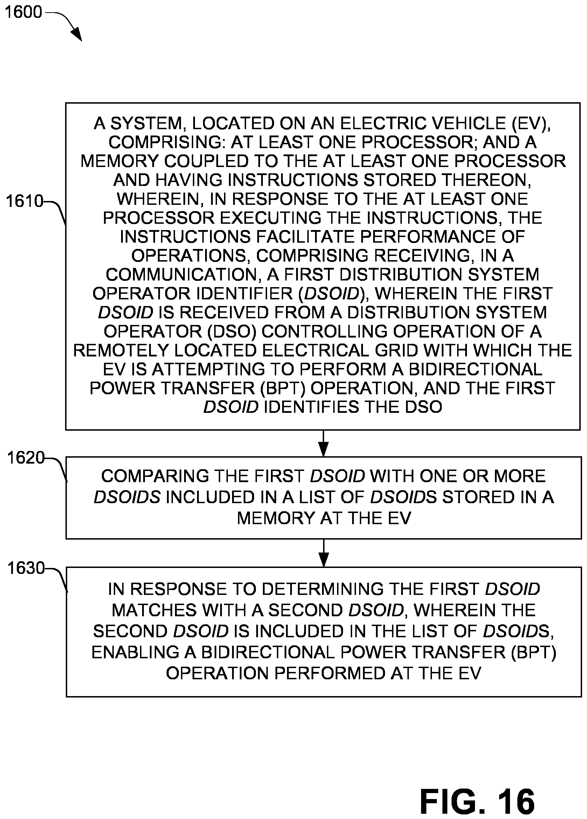

**FIG. 16****,** via flowchart 1600, presents a computer-implemented method for utilizing *DSOIDs* to enable implementation of a BPT operation between an EV and a DSO, in accordance with an embodiment.

At 1610, the method can comprise a system (e.g., BPT system 124 comprising EVCC 115 and BMS 111), located on an electric vehicle (e.g., EV 110), comprising: at least one processor (e.g., processor 182A); and a memory (e.g., memory 184A) coupled to the at least one processor and having instructions stored thereon, wherein, in response to the at least one processor executing the instructions, the instructions facilitate performance of operations, comprising receiving, in a communication (e.g., communication 197A-*n*), a first distribution system operator identifier (e.g., *DSOID* 150A), wherein the first *DSOID* is received from a distribution system operator (e.g., DSO 138) controlling operation of a remotely located electrical grid (e.g., electrical grid 130) with which the EV is attempting to perform a bidirectional power transfer (BPT) operation, and the first *DSOID* identifies the DSO.

At 1620, the method can further comprise comparing the first *DSOID* with one or more *DSOIDs* (e.g., *DSOIDs* 150B*-n*) included in a list of *DSOIDs* (e.g., a whitelist 190A) stored in the memory at the EV.

At 1630, the method can further comprise, in response to determining the first *DSOID* matches with a second *DSOID* (e.g., *DSOID 150B*)*,* wherein the second *DSOID* is included in the list of *DSOIDs,* enabling a bidirectional power transfer (BPT) operation performed at the EV.

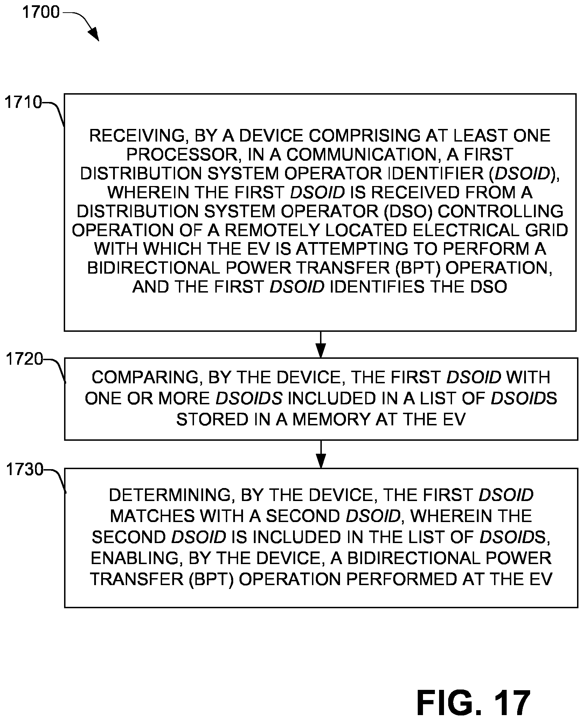

**FIG. 17****,** via flowchart 1700, presents a computer-implemented method for utilizing *DSOIDs* to enable implementation of a BPT operation between an EV and a DSO, in accordance with an embodiment.

At 1710, the method can comprise receiving, by a device (e.g., BPT system 124 comprising EVCC 115 and BMS 111) comprising at least one processor (e.g., processor 182A), in a communication (e.g., communication 197A-*n*), a first distribution system operator identifier (e.g., *DSOID* 150A), wherein the first *DSOID* is received from a distribution system operator (e.g., DSO 138) controlling operation of a remotely located electrical grid (e.g., electrical grid 130) with which the EV is attempting to perform a bidirectional power transfer (BPT) operation, and the first *DSOID* identifies the DSO.

At 1720, the method can further comprise comparing, by the device, the first *DSOID* with one or more *DSOIDs* (e.g., *DSOIDs* 150B*-n*) included in a list (e.g., whitelist 190A) of *DSOIDs* stored in a memory (e.g., memory 184A) at the EV.

At 1730, the method can further comprise, in response to determining, by the device, the first *DSOID* matches with a second *DSOID* (e.g., *DSOID* 150B), wherein the second *DSOID* is included in the list of *DSOIDs,* enabling, by the device, a bidirectional power transfer (BPT) operation performed at the EV.

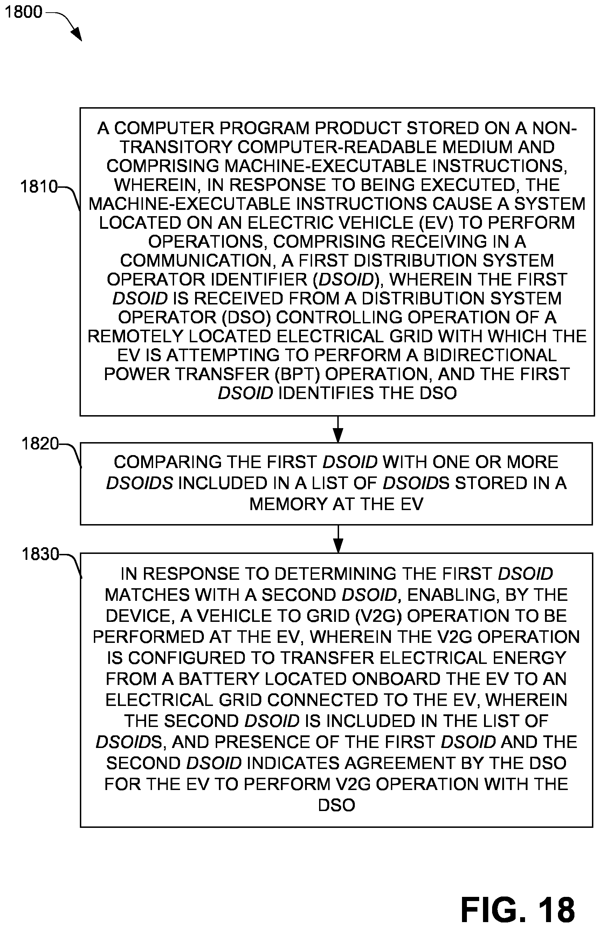

**FIG. 18****,** via flowchart 1800, presents a computer-implemented method for utilizing *DSOIDs* to enable implementation of a BPT operation between an EV and a DSO, in accordance with an embodiment.

At 1810, the method can utilize a computer program product stored on a non-transitory computer-readable medium (e.g., memory 184A-*n*) and comprising machine-executable instructions (e.g., executable by processor 182A-*n*), wherein, in response to being executed, the machine-executable instructions cause a system (e.g., BPT system 124 comprising EVCC 115 and BMS 111) located on an electric vehicle (e.g., EV 110) to perform operations, comprising receiving in a communication (e.g., communication 197A-n), a first distribution system operator identifier (e.g., *DSOID* 150A), wherein the first *DSOID* is received from a distribution system operator (e.g., DSO 138) controlling operation of a remotely located electrical grid (e.g., electrical grid 130) with which the EV is attempting to perform a bidirectional power transfer (BPT) operation, and the first *DSOID* identifies the DSO.

At 1820, the method can further comprise comparing the first *DSOID* with one or more *DSOIDs* (e.g., *DSOIDs* 150B*-n*) included in a list of *DSOIDs* stored in a memory (e.g., memory 184A) at the EV.

At 1830, the method can further comprise in response to determining the first *DSOID* matches with a second *DSOID* (e.g., *DSOID* 150B), enabling, by the device, a vehicle to grid (V2G) operation to be performed at the EV, wherein the V2G operation is configured to transfer electrical energy from a battery (e.g., battery 112) located onboard the EV to the electrical grid connected to the EV, wherein the second *DSOID* is included in the list of *DSOIDs,* and presence of the first *DSOID* and the second *DSOID* indicates agreement by the DSO for the EV to perform V2G operation with the DSO.

### 6. ADDITION OF CONTROLLING/CEASE ACTIVE POWER GRID CODE REQUIREMENTS INTO IEC 61851

As mentioned, existing specifications are to be amended to enable EV 110 to be certified as a generator. In an embodiment, a requirement can be added to a specification 117A*n* (e.g., IEC 61851, IEC 61851-1) to comply with respective grid codes 137A-n/requirements (as present in Europe, for example) for EV 110 to operate as a generator. The additional requirement can entail controlling/ceasing active power based on a signal (e.g., a setting 150A-n in communication 197A-n) received from an external system, wherein the external system can be any suitable source such as an external system operated by DSO 138, a cloud-based system, a physical system connected to the EVSE 120, and the like. IEC 61851 can function as a standard regarding hardware (HW) requirements of an EVSE 120 connected to EV 110. To further ensure compliance with EN 50549-1, in an embodiment, a hardware requirement (e.g., specification 117A-n, IEC 61851, and the like) can exist requiring a digital input/interface with the EVSE 120 (e.g., in a wallbox proximate to the EVSE 120), whereby the digital input can be configured to receive an operational input (e.g., a signal 150A in communications 197A-n), e.g., digital high and low inputs from the DSO 138 regarding discharging power to the grid 130.

In an embodiment, per EN 50549-1 (e.g., EN 50549-1:2019, sections 4.9.4.3 and 4.9.5.), the operational input can be utilized for interface protection, whereby the operational input can be digital in nature, and enable DSO 138 to utilize a communication 197A-n to activate a restrictive frequency window. Further, the interface protection can have at least two configurable digital inputs, whereby the at least two configurable digital inputs can be used, in non-limiting examples, to allow transfer trip, switching the transfer to a narrow frequency band, and the like.

The digital interface can be provided between the EV 110 and the grid 130 (e.g., operated by the DSO 138), such that when the EVSE 120 receives a signal from the digital input/interface, operation of the EV 110 can be configured to be controlled by/operate in accordance with the digital signal. In an example embodiment, the signal can comprise an instruction limiting discharging power to zero power, zero watts (0W) (e.g., stop energy discharge from EV 110) via a high level communication 197A-n (e.g., ISO 15118-2, ISO 15118-20, and the like). In response to receiving the signal, the EV 110 can be instructed to stop discharging energy from battery 112. In another example, the signal can comprise an instruction limiting discharge of power from the EV 110 to be 5kWh, or any other arbitrary value. By implementing the embodiment, EV 110 is in compliance with an EN 50549 grid code requirement regarding controlled discharge of energy to the grid 130, enabling EV 110 to certify as a generator under EN 50549. Accordingly, under IEC 61851, EVSE 120 can be configured to include a digital I/O to receive signals from a DSO 138.

It is to be appreciated that the digital signal reducing the discharge of power (e.g., to 0W, or other defined power) is utilized to control power discharge between the EV 110 and the grid 130. However, while power discharge is limited (e.g., to 0W between the EV 110 and the grid 130), power discharge from the EV 110 can still be undertaken between the EV110 and a system/device located/operating local to the EV 110, such as a power system located in a house (not shown) at which the EV 110 is currently parked and connected to the house-based power system. In an example scenario, the grid 130 may be experiencing an issue and the DSO 138 determines no power should be discharged to the grid 130 while the issue persists, however, power can still be discharged to the house-based system while the issue persists at grid 130. Once the issue has been resolved, the DSO 138 can re-initiate discharge of power from the EV 110 to the grid 130. In an embodiment, the digital signal received from the DSO 138 can be considered to operate in a Boolean fashion, such that in the event of a physical switch/pin at the grid 130 is activated (e.g., in response to an issue at the grid 130), the analog nature of the physical operation of the switch/pin can be captured as a digital signal at the EVSE 120, such that switch open = maintain power discharge operation and switch closed = turn off the power discharge operation by reducing the discharge power to 0W.

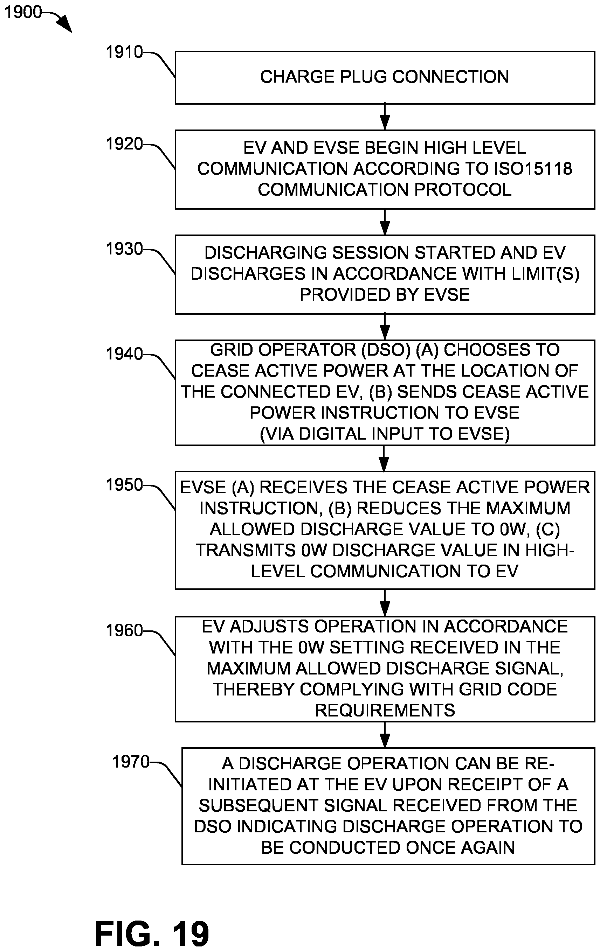

**FIG 19****,** via flow chart 1900, presents an example computer-implemented method to enable an electric vehicle cease an active power operation in response to a signal received from a DSO, in accordance with at least one embodiment.

At 1910, an EV (e.g., EV 110) is electrically coupled (e.g., with charging cable 116) to an EVSE (e.g., EVSE 120), wherein the EVSE is further electrically coupled to an energy grid (e.g., grid 130), the grid can be operated by a DSO (e.g., DSO 138).

At 1920, the EV and the EVSE can conduct high level communication (e.g., communications 197A-*n* utilized to transfer data 150A-n), wherein the communications can be conducted in accordance with ISO 15118 communication protocols (e.g., ISO 15118-2, ISO 15118-20, and the like).

At 1930, the EV can function as a generator, with power discharge of the EV batteries (e.g., batteries 112) to the EVSE/grid, wherein the power discharge can occur in accordance with limits provided to the EV by the EVSE.

At 1940, at a particular moment, the DSO decides to cease active power generation from the location of the EVSE/EV. The DSO forwards a cease active power instruction (e.g., signal 150A in communications 197A-n) to the EVSE via a digital interface to the EVSE.

At 1950, the EVSE, in response to receiving/processing the cease active power instruction (e.g., signal 150A in communications 197A-*n*), generates and transmits an instruction (e.g., signal 150B in communications 197A-*n*) to the EV, wherein the instruction can be to reduce a maximum allowed discharge value by the EV to 0W. As previously mentioned, rather than a power discharge of 0W being defined, the power/power discharge instruction can be of any defined value.

At 1960, in response to receiving the maximum allowed discharge value of 0W, the EV reduces active power discharge value to 0W, effectively preventing discharge of power from the batteries onboard the EV. It is to be appreciated that while a charging session is configured for a defined period of time (e.g., 4 hour discharge), the cease active power generation instruction can be received at any time during the charging session, and further, a re-initiate the active power generation can be subsequently received during the charging session, whereupon receipt, power discharge from the battery onboard the EV to the grid (via the EVSE) can be resumed in accordance with the defined period of time for the power discharge.

At 1970, power discharge from the batteries onboard the EV can remain at 0W until a further instruction (e.g., signal 150C in communications 197A-*n*) is subsequently received from the DSO to increase the maximum allowed discharge value to a value greater than 0W.

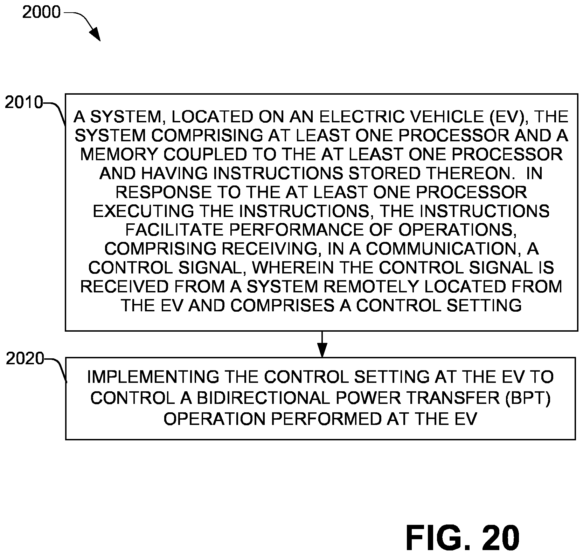

**FIG. 20****,** via flowchart 2000, presents a computer-implemented method for limiting power discharge at an EV based on a received control signal, in accordance with an embodiment.

At 2010, the method can be performed by a system (e.g., BPT system 124 comprising EVCC 115 and BMS 111), located on an electric vehicle (e.g., EV 110), the system comprising at least one processor (e.g., processor 182A) and a memory (e.g., memory 184A) coupled to the at least one processor and having instructions stored thereon. In response to the at least one processor executing the instructions, the instructions facilitate performance of operations, comprising receiving, in a communication (e.g., communication 197A-*n*), a control signal (e.g., signal 150B), wherein the control signal is received from a system (e.g., EVSE 120, GCC 133, and the like) remotely located from the EV and comprises a control setting (e.g., a power setting).

At 2020, the method can further comprise implementing the control setting at the EV to control a bidirectional power transfer (BPT) operation performed at the EV.

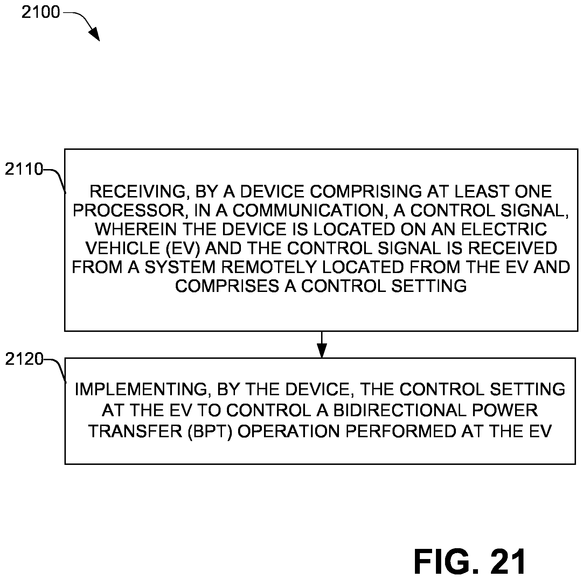

**FIG. 21****,** via flowchart 2100, presents a computer-implemented method for limiting power discharge at an EV based on a received control signal, in accordance with an embodiment.

At 2110, the method can comprise receiving, by a device (e.g., BPT system 124 comprising EVCC 115 and BMS 111) comprising at least one processor, in a communication (e.g., communication 197A-*n*), a control signal (e.g., setting 150A), wherein the device is located on an electric vehicle (e.g., EV 110) and the control signal is received from a system (e.g., EVSE 120, GCC 133, and the like) remotely located from the EV and comprises a control setting (e.g., setting 150A for power discharge at EV 110).

At 2120, the method can further comprise implementing, by the device, the control setting at the EV to control a bidirectional power transfer (BPT) operation performed at the EV.

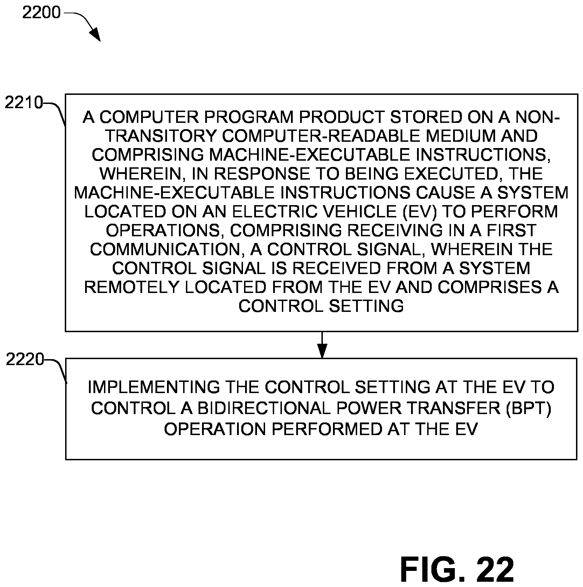

**FIG. 22****,** via flowchart 2200, presents a computer-implemented method for limiting power discharge at an EV based on a received control signal, in accordance with an embodiment.

At 2210, the method can utilize a computer program product stored on a non-transitory computer-readable medium (e.g., memory 184A-n) and comprising machine-executable instructions (e.g., executable by processor 182A-n), wherein, in response to being executed, the machine-executable instructions cause a system (e.g., BPT system 124 comprising EVCC 115 and BMS 111) located on an electric vehicle (e.g., EV 110) to perform operations, comprising receiving in a first communication (e.g., communication 197A-*n*), a control signal (e.g., setting 150A), wherein the control signal is received from a system (e.g., EVSE 120, GCC 133, and the like) remotely located from the EV and comprises a control setting (e.g., setting 150A for power discharge at EV 110).

At 2220, the method can further comprise implementing the control setting at the EV to control a bidirectional power transfer (BPT) operation performed at the EV.

### 7. ADDITION OF ACTIVE POWER SETPOINT GRID CODE REQUIREMENT INTO IEC 61851

In an embodiment, another requirement can be added to IEC 61851 (e.g., IEC 61851-1) to comply with respective grid codes 137A-n/requirements 117A-n/135A-n for EV 110 to operate as a generator. The additional requirement can entail limiting an active discharge power based on a received limit, setpoint, etc., wherein the signal can be received from a DSO 138. IEC 61851 is a standard regarding hardware (HW) requirements of an EVSE 120 connected to EV 110. To further compliance with EN 50549-1, in an embodiment, a HW requirement can exist requiring a digital input/interface with the EVSE 120 (e.g., in a wallbox proximate to the EVSE 120), whereby the digital input (e.g., in communication 197A-n) can be a hardware digital input and/or an input directly received from a cloud back-end (e.g., cloud based system 145) having connection to a related DSO 138 infrastructure, and suchlike.

The digital interface can be provided between the EV 110 and the electrical grid 130 (e.g., operated by the DSO 138), such that when the EVSE 120 receives a signal from the digital input/interface, the signal (e.g., a communication 197A-n) can comprise an active discharge power instruction (e.g., signal 150A-n) limiting discharging power of the EV 110. In response to the active discharge power instruction 150A, the EV 110 can be instructed to limit power discharge from battery 112 in accordance with the parameter value received in the active discharge power instruction. By implementing the embodiment, EV 110 is in compliance with an EN 50549 grid code 137A requirement regarding controlled discharge of energy E to the grid 130, enabling EV 110 to certify as a generator under EN 50549. Accordingly, under IEC 61851, EVSE 120 can be configured to include a digital I/O or a cloud backend to receive signals from a DSO 138. It is to be appreciated that the signal (e.g., active discharge power instruction 150A) received from the digital input/interface can be of any pertinent value/magnitude/range/scope, such as a limit (e.g., a value or level that cannot be exceeded), a setpoint (e.g., a particular value to be complied with, such as maintain power discharge at xkW/xkWh, a threshold value, and the like).

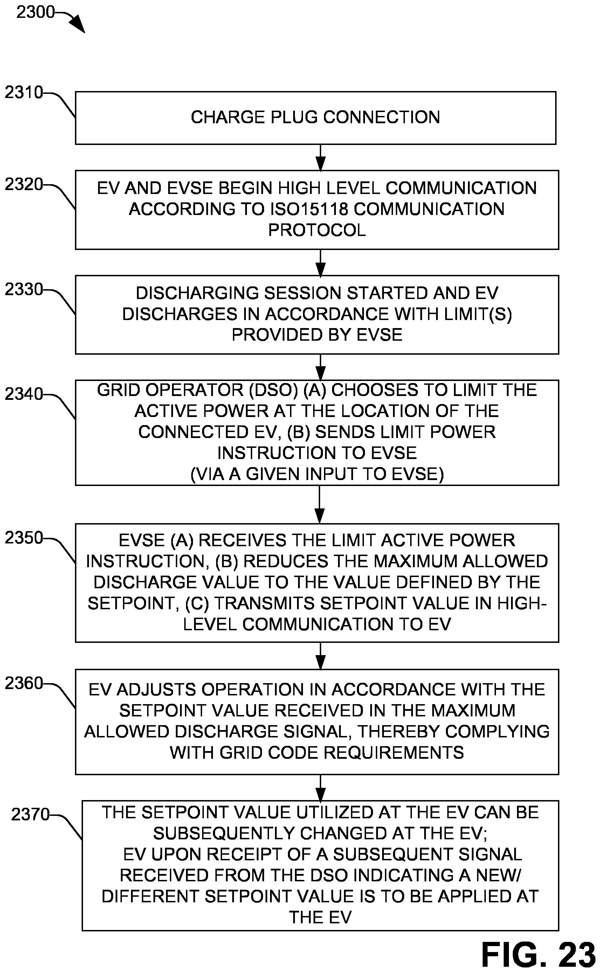

**FIG 23****,** via flow chart 2300, presents an example computer-implemented method to enable controlling power discharged by an electric vehicle in response to a signal received from a DSO, in accordance with at least one embodiment.

At 2310, an EV (e.g., EV 110) is electrically coupled (e.g., with charging cable 116) to an EVSE (e.g., EVSE 120), wherein the EVSE is further electrically coupled to an electrical grid (e.g., electrical grid 130), the grid can be operated by a DSO (e.g., DSO 138).

At 2320, the EV and the EVSE can conduct high level communication (e.g., communications 197A-n utilized to transfer data 150A-n), wherein the communications can be conducted in accordance with ISO 15118 communication protocols (e.g., ISO 15118-2, ISO 15118-20, specifications 117A-*n*, and the like).

At 2330, the EV can function as a generator, with power discharge of the EV batteries (e.g., batteries 112A-*n*) to the EVSE/grid, wherein the power discharge can occur in accordance with limits (e.g., in parameters/settings 150A-n) provided to the EV by the EVSE.

At 2340, at a particular moment, the DSO can limit active power generation from the location (e.g., location *L1*) of the EVSE/EV. The DSO forwards a limit active power instruction (comprising a setpoint value 139A) to the EVSE via a digital interface or a cloud backend (e.g., cloud 145) to the EVSE.

At 2350, the EVSE, in response to receiving/processing the limit active power instruction, generates and transmits an instruction (e.g., parameter/setting 150A-*n* in a communication 197A-*n*) to the EV, wherein the instruction is configured to limit the amount of discharge power to be received from the EV. In an example embodiment, a plurality of batteries (located on respective EVs 110A*-n*) can be present at/connected to the EVSE, whereby the EVSE can determine a setpoint to implement across the plurality of batteries.

At 2360, in response to receiving the active power setpoint value, the EV adjusts/reduces/increases the active power discharge value in accordance with the active power setpoint value.

At 2370, power discharge from the batteries onboard the EV can remain under the control of the setpoint value until a further instruction is subsequently received from the DSO to adjust the active power setpoint in accordance with a newly received setpoint value.

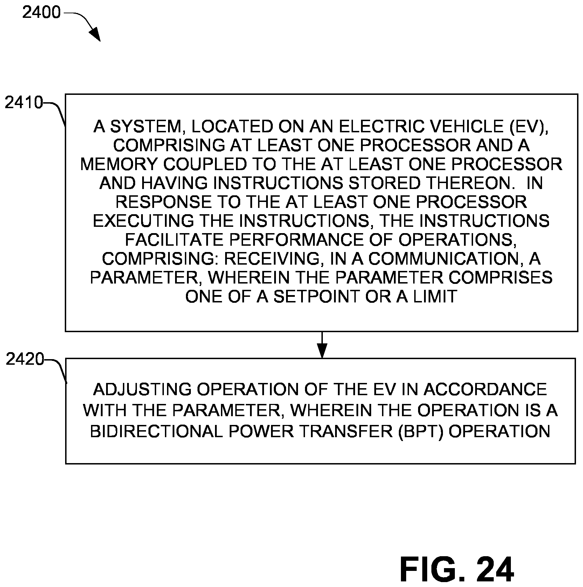

**FIG. 24****,** via flowchart 2400, presents a computer-implemented method for controlling operation of an EV based on a received limit or setpoint, in accordance with an embodiment.

At 2410, the method can comprise a system (e.g., BPT system 124 comprising EVCC 115 and BMS 111), located on an electric vehicle (e.g., EV 110), comprising at least one processor (e.g., processor 182A) and a memory (e.g., memory 184A) coupled to the at least one processor and having instructions stored thereon. In response to the at least one processor executing the instructions, the instructions facilitate performance of operations, comprising: receiving, in a communication (e.g., communication 197A-*n*), a parameter (e.g., parameter 150A), wherein the parameter comprises one of a setpoint or a limit.

At 2420, the method can further comprise adjusting operation of the EV in accordance with the parameter, wherein the operation is a bidirectional power transfer (BPT) operation.

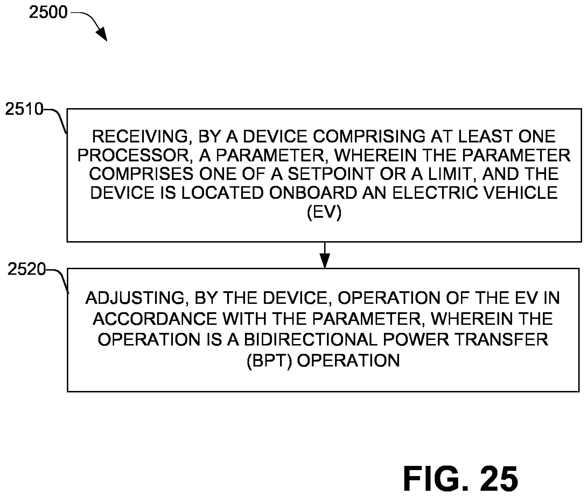

**FIG. 25****,** via flowchart 2500, presents a computer-implemented method for controlling operation of an EV based on a received limit or setpoint, in accordance with an embodiment.

At 2510, the method can comprise receiving, by a device (e.g., BPT system 124 comprising EVCC 115 and BMS 111) comprising at least one processor (e.g., processor 182A), a parameter (e.g., parameter 150A), wherein the parameter comprises one of a setpoint or a limit, and the device is located onboard an electric vehicle (e.g., EV 110).

At 2520, the method can further comprise adjusting, by the device, operation of the EV in accordance with the parameter, wherein the operation is a bidirectional power transfer (BPT) operation.

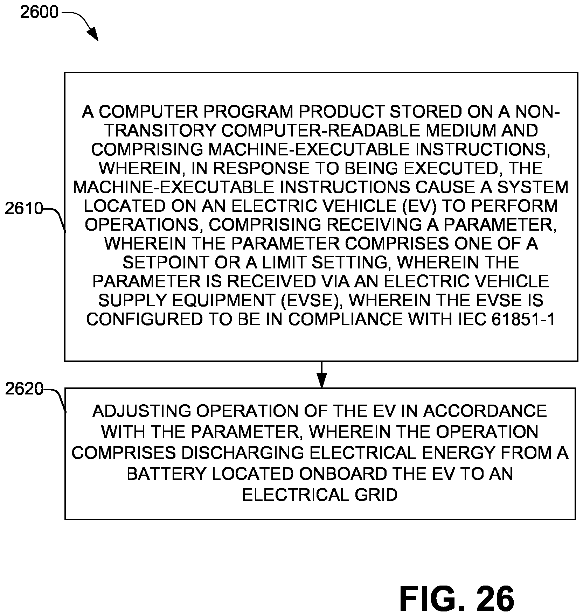

**FIG. 26****,** via flowchart 2600, presents a computer-implemented method for controlling operation of an EV based on a received limit or setpoint, in accordance with an embodiment.

At 2610, the method can utilize a computer program product stored on a non-transitory computer-readable medium (e.g., memory 184A-n) and comprising machine-executable instructions (e.g., executable by processor 182A-*n*), wherein, in response to being executed, the machine-executable instructions cause a system (e.g., BPT system 124 comprising EVCC 115 and BMS 111) located onboard an electric vehicle (e.g., EV 110) to perform operations, comprising receiving a parameter (e.g., parameter 150A), wherein the parameter comprises one of a setpoint or a limit setting, wherein the parameter is received via an electric vehicle supply equipment (e.g., EVSE 120), wherein the EVSE is configured to be in compliance with IEC 61851-1 (e.g., specification 117A-*n*).

At 2620, the method can further comprise adjusting operation of the EV in accordance with the parameter, wherein the operation comprises discharging electrical energy from a battery (e.g., battery 112) located onboard the EV to an electrical grid (e.g., electrical grid 130).

### 8. SHARING OF COUNTY AND REGIONAL DEPENDENT GRID CODE REQUIREMENTS WITH AN EV

As previously mentioned, grid code 137A-*n* requirements may be in place at the location of various ESVE's 120A-*n*. Accordingly, when an EV 110 is to operate as a generator, the EV 110 (when at a first location, e.g., location *L1*) has to operate in accordance with a first country/regional/county grid code 137A requirement implemented at a first EVSE 120A and when the EV 110 is located at another/second EVSE 120B (e.g., a second location *Ln*) the EV 110 has to operate in accordance with a second country/regional/county grid code 137B requirement. Hence, the EV 110 should always know the grid code(s) 137A-*n* implemented/enacted at a given location (e.g., per a unique *subdivision code(s),* such as *subdivision codes* available in ISO 3166-2), for the EV 110 to operate in compliance with the respective enacted grid code(s) 137A-*n*.

As previously mentioned, ISO 3166-2 (e.g., specification 117A) can be utilized with regard to identifying a location *L1-Ln* of an EVSE 120, wherein the location can be based on the location codes/subdivision *codes* (e.g., in parameters/data 150A-*n*) identifying respective countries, subdivisions (e.g., provinces or states), etc. Additional services can be utilized to share the respective regional grid code(s) 137A-*n*.

In an aspect, EV 110 may only be able to operate according to a particular specification 117A and may not be able to comply with a subsequently available version, e.g., specification 117A-1, of the particular specification 117A. Hence, to ensure backward compatibility of BPT/V2G operation between EV 110 and EVSE 120/electrical grid 130, a feature implemented in a subsequent version of a particular specification 117A-n can be incorporated into the prior version of the specification, rendering the feature to be backward compatible. Accordingly, where the EV 110 is operating in a legacy manner of operation in compliance with a prior/current specification (e.g., an initial version of the specification, a first version of the specification 117A, and the like) but is unable to operate in compliance with a subsequent version of the specification (e.g., a second version of the specification 117A-1), to enable backward compatibility, one or more features/parameters pertaining to BPT/V2G operation in a subsequent version of a specification (e.g., amended version of specification 117A-1 is ISO 15118-20) can be applied to the prior version of the specification (e.g., prior version of specification 117A is ISO 15118-2). Accordingly, a legacy EV 110 operating in compliance with the prior version of a specification, can utilize BPT/V2G operation to enable the legacy EV 110 to function as a generator providing energy to the electrical grid 130.

As previously mentioned, ISO 15118 is a specification 117A-*n* for communication between an EV 110 and an EVSE 120, wherein ISO 15118-20 is a later/subsequent version of ISO 15118-2.

The following provide a sequence of codes that can be transmitted to ensure the EVSE 120 (and EV 110) are implementing local grid codes 137A-*n*.

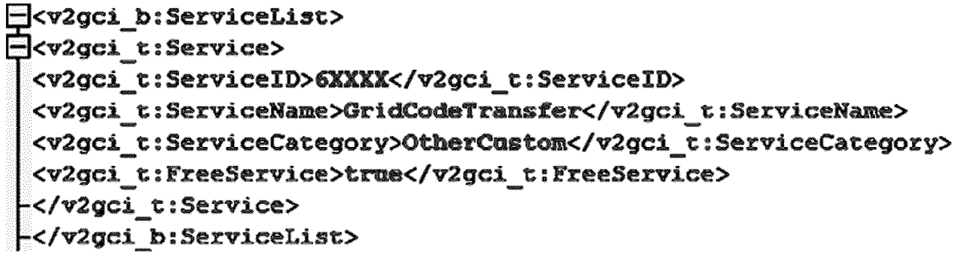

**EXAMPLE CODE 2:** Provides an example of an additional service message 197A-n to be sent by EVSE 120 with a *ServiceDiscoveryResponse* (a.k.a., *ServiceDiscoveryRes*) message.

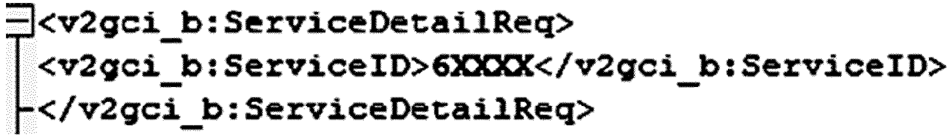

**EXAMPLE CODE 3:** Provides an example of a message 197A-*n* to be sent by EV 110 with a *ServiceDetailRequest* (a.k.a., *ServiceDetailReq*) message.

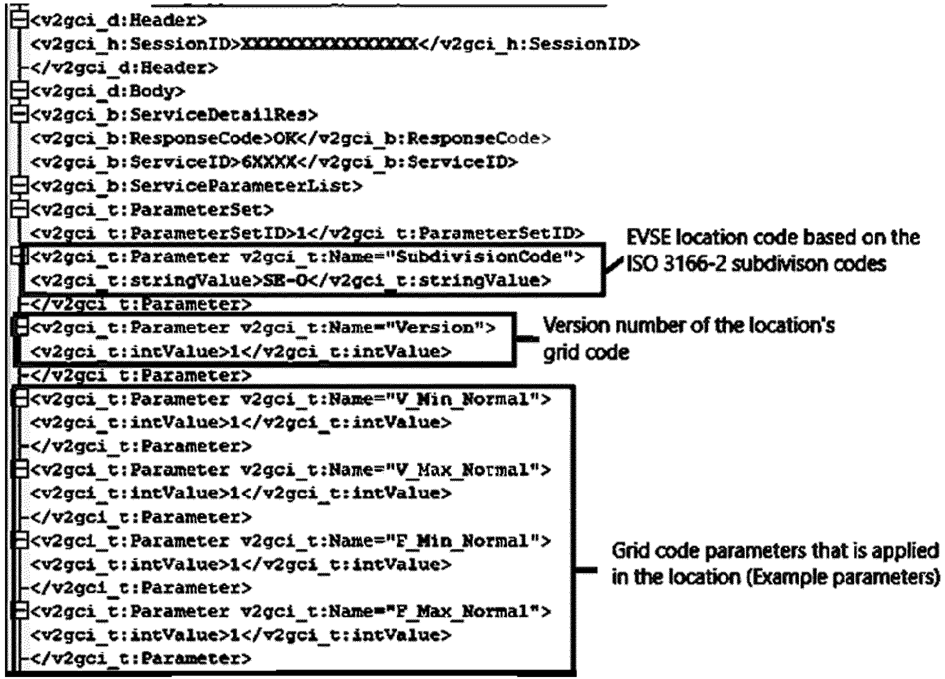

**EXAMPLE CODE 4:** example message 197A to send grid codes 137A-n/parameters 150A*-n*/139A*-n* in the *ServiceDetailRes* message.

To identify where the EVSE 120 is located, unique *SubDivision* codes configured in accordance with ISO 3166-2 can be utilized as a first parameter (e.g., parameters 150A-*n*/*139A-n)* in respective message elements (e.g., in communications 197A-*n*).

In an embodiment, after EV 110 has received the grid codes 137A-*n* and updated internal parameters 150A-*n* at EV 110 in accordance with the foregoing message sets, EV 110 can utilize the respective grid codes 137A-n to select a desired charging service by sending *PaymentServiceSelectionReq* message with the corresponding ServiceID as a *SelectedService.*

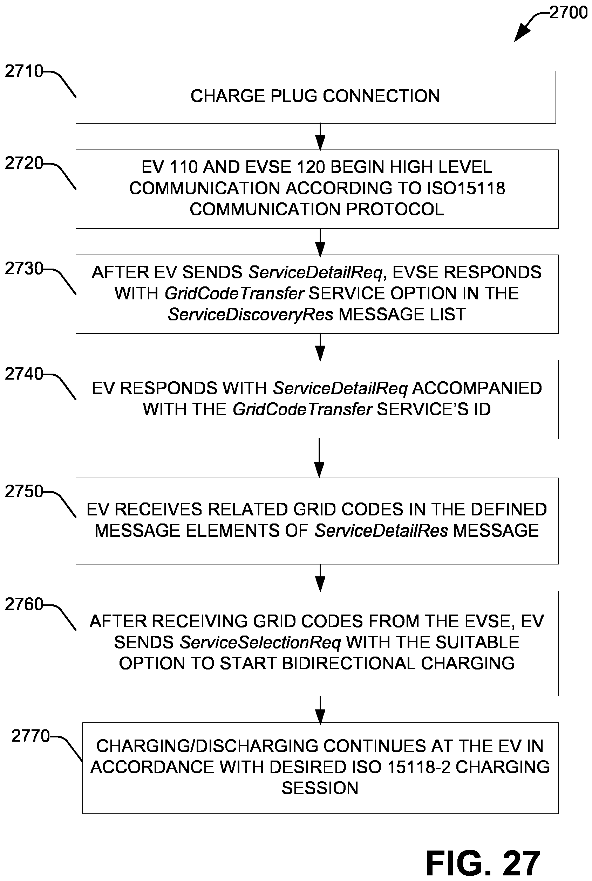

**FIG 27****,** via flow diagram 2700, presents an example computer-implemented method to enable determination of EVSE and EV location based on regional codes received at the EVSE/EV, in accordance with at least one embodiment.

At 2710, an EV (e.g., EV 110) is electrically coupled (e.g., with charging cable 116) to an EVSE (e.g., EVSE 120), wherein the EVSE is further electrically coupled to an energy grid (e.g., grid 130), the grid can be operated by a DSO (e.g., DSO 138).

At 2720, the EV and the EVSE can conduct high level communication (e.g., communications 197A-*n* utilized to transfer data 150A-n), wherein the communications can be conducted in accordance with any currently implemented (e.g., ISO 15118-2), or previously implemented specification/protocol, and/or any comparable/related/subsequent version (e.g., ISO 15118-20), communication protocols, operating protocols, and the like.

At 2730, after EV 110 sends a *ServiceDetailReq,* EVSE 120 can respond with a *GridCodeTransfer* service option in a *ServiceDiscoveryRes* message list (e.g., per EXAMPLE CODE 2).

At 2740, EV 110 can respond with a *ServiceDetailReq* accompanied with the *GridCodeTransfer* services ID (e.g., per EXAMPLE CODE 3).

At 2750, EV 110 can receive (from EVSE 120) related grid codes 137A-n in the defined message elements of a *ServiceDetailRes* message (e.g., per EXAMPLE CODE 4).

At 2760, after receiving the information regarding grid codes 137A-n from EVSE 120, the EV 110 can respond with a *ServiceSelectionReq* message with the desired option to start bidirectional charging in accordance with the implemented grid codes 137A-n.

At 2770, discharging/charging continues at EV 110 according to the desired ISO 15118-2 charging session.

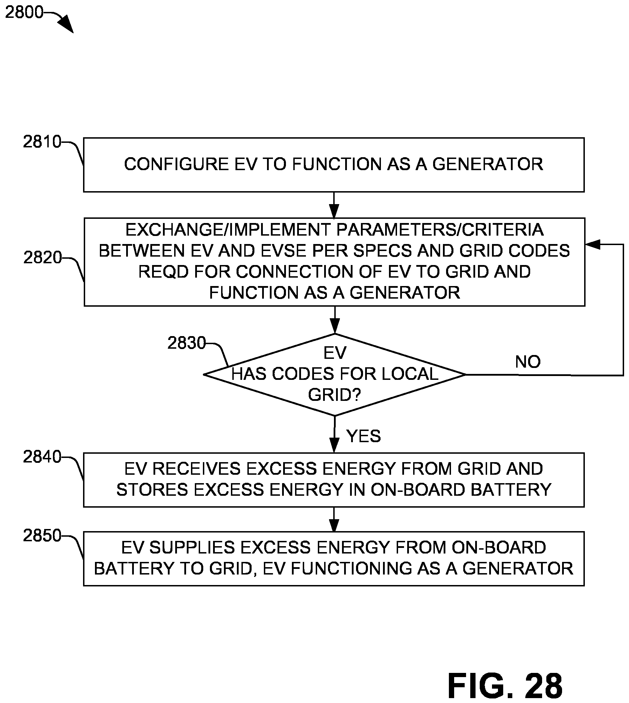

**FIG. 28****,** via flow chart 2800, presents an example computer-implemented method to enable an electric vehicle to function as a generator on an electric grid in accordance with respective specifications/regulations/grid codes required for connection/energy provision to a local grid, in accordance with at least one embodiment.

At 2810, an EV (e.g., EV 110) can be configured to function as a generator, whereby the EV can be connected to a local grid (e.g., grid 130) via an EVSE (e.g., EVSE 120). During periods of high energy production at the grid, excess energy (e.g., from wind turbines, solar panels, etc.) can be stored in batteries (e.g., batteries 112) on-board the EV. During periods of low energy production at the grid, the excess energy stored in the EV batteries can be supplied/fed-in back to the grid.

At 2820, as previously mentioned, for an EV to function as a generator, the EV has to operate in compliance with respective specifications/regulations (e.g., specifications 135A-n), grid codes (e.g., grid codes 137A-n), etc., that are implemented at the grid to which the EV is connected, e.g., to ensure safe operation of the EV as a generator and prevent damage to/unsafe operation of the grid. Respective handshakes and data exchange (e.g., in data 150A-n) can occur between the EV and the EVSE to facilitate respective parameters, variables, settings, instructions, etc., to be exchanged between (e.g., between EVCC 115, SECC 125, GCC 133) the EV, the EVSE, and the grid to enable the respective controllers (e.g., BMS 111, EVSE controller 122, grid controller 132) to control and monitor operation of the EV during storage of energy from the grid to the EV, and further, transfer of the stored energy from the EV back to the grid. In an embodiment, a current specification implemented on the EV can be updated/modified to incorporate other elements included in one or more other specifications/grid codes (e.g., VDE-AR-n 4105, EN50549-1, and suchlike) to enable the EV to function in accordance with the other specifications/grid codes. A communication specification (e.g., ISO 15118-20) can be configured to transmit/receive information as required by the other specifications/grid codes.

At 2830, with the EV connected to the EVSE/grid, respective information (e.g., specifications, grid codes) can be shared and a confirmation (e.g., by any of BMS 111, EVSE controller 122, grid controller 132) performed to ensure that the EV is operating in accordance with the respective specifications, regulations, grid codes, etc. In response to a determination of NO, the respective parameters are not implemented/being shared, method 2800 can return to step 2820 for the required settings/information to be obtained (e.g., from EVSE, grid). Method 2800 can return to step 2830 for the confirmation to be performed once more.

At 2830, in response to a determination of YES, the respective parameters are being implemented/shared, method 2800 can advance to step 2840.

At 2840, as previously mentioned, with the EV connected to the grid via the EVSE, excess energy generated at the grid (e.g., during high production/low demand by wind turbines, solar panels, etc.) can be stored by the batteries (e.g., batteries 112) onboard the EV.

At 2850, as previously mentioned, during periods of low energy production (e.g., zero wind conditions, night time, etc.) but energy demand by customers of the grid, the energy previously stored in the EV batteries can be transferred back to the grid, with the EV operating as a generator in accordance with the respective specifications, regulations, grid codes, etc., that may be implemented/enforced by the grid to which the EV is connected via the EVSE.

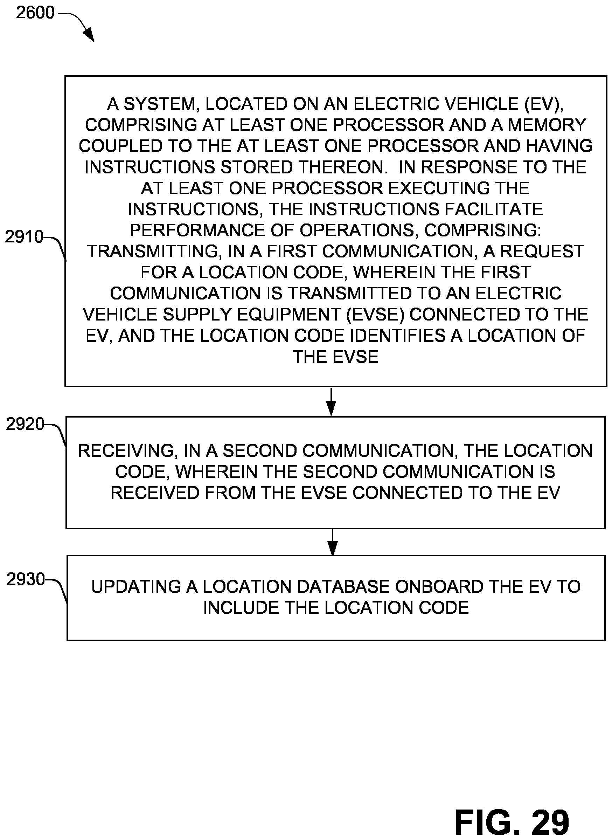

**FIG. 29****,** via flowchart 2900, presents a computer-implemented method for ensuring an EV has the correct location code for an EVSE, enabling BPT between the EV and the EVSE, in accordance with an embodiment.

At 2910, the method can comprise a system (e.g., BPT system 124 comprising EVCC 115 and BMS 111), located on an electric vehicle (e.g., EV 110), comprising at least one processor (e.g., processor 182A) and a memory (e.g., memory 184A) coupled to the at least one processor and having instructions stored thereon. In response to the at least one processor executing the instructions, the instructions facilitate performance of operations, comprising: transmitting, in a first communication (e.g., communication 197A), a request for a location code (e.g., location code 150A), wherein the first communication is transmitted to an electric vehicle supply equipment (e.g., EVSE 120) connected to the EV, and the location code identifies a location (e.g., location *L1*) of the EVSE.

At 2920, the method can further comprise receiving, in a second communication (e.g., communication 197B), the location code, wherein the second communication is received from the EVSE connected to the EV.

At 2930, the method can further comprise updating a location database (e.g., database/whitelist 190A) onboard the EV to include the location code.

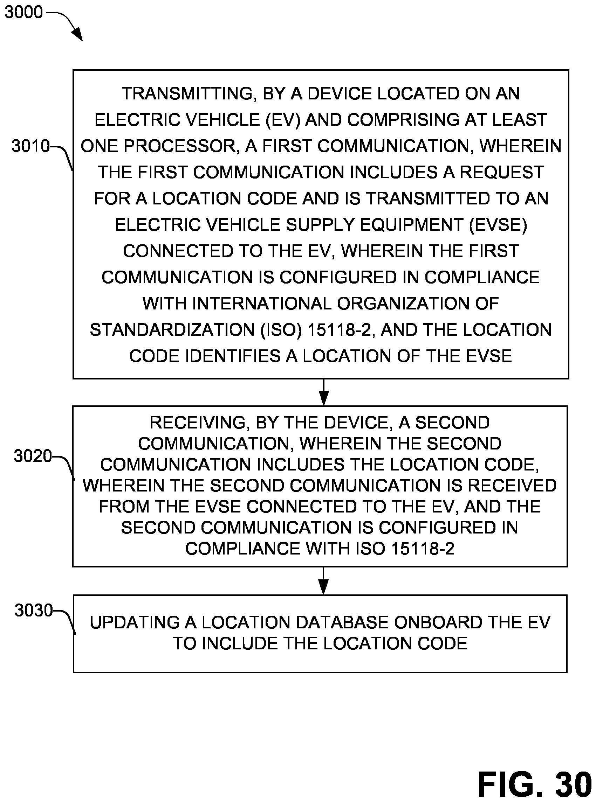

**FIG. 30****,** via flowchart 3000, presents a computer-implemented method for ensuring an EV has the correct location code for an EVSE, enabling BPT between the EV and the EVSE, in accordance with an embodiment.

At 3010, the method can comprise transmitting, by a device (e.g., BPT system 124 comprising EVCC 115 and BMS 111) located on an electric vehicle (e.g., EV 110) and comprising at least one processor (e.g., processor 182A), a first communication (e.g., communication 197A), wherein the first communication includes a request for a location code (e.g., location code 150A) and is transmitted to an electric vehicle supply equipment (e.g., EVSE 120) connected to the EV, wherein the first communication is configured in compliance with International Organization of Standardization (ISO) 15118-2 (e.g., specification 117A), and the location code identifies a location (e.g., location *L1*) of the EVSE.

At 3020, the method can further comprise receiving, by the device, a second communication (e.g., communication 197B), wherein the second communication includes the location code, wherein the second communication is received from the EVSE connected to the EV, and the second communication is configured in compliance with ISO 15118-2 (e.g., specification 117A).

At 3030, the method can further comprise updating a location database (e.g., database/whitelist 190A) onboard the EV to include the location code.

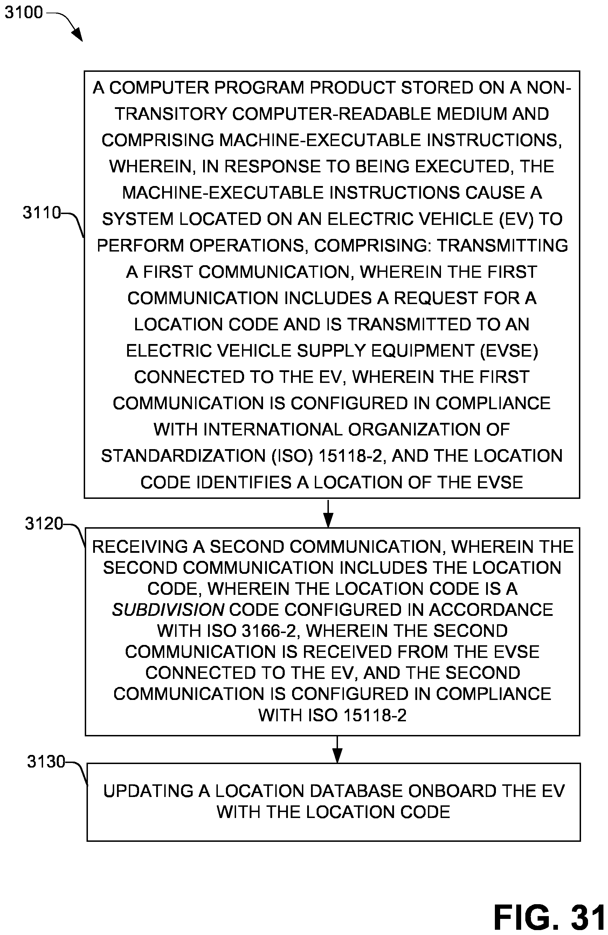

FIG. 31, via flowchart 3100, presents a computer-implemented method for ensuring an EV has the correct location code for an EVSE, enabling BPT between the EV and the EVSE, in accordance with an embodiment.

At 3110, the method can utilize a computer program product stored on a non-transitory computer-readable medium (e.g., memory 184A-n) and comprising machine-executable instructions (e.g., executable by processor 182A-n), wherein, in response to being executed, the machine-executable instructions cause a system (e.g., BPT system 124 comprising EVCC 115 and BMS 111) located on an electric vehicle (e.g., EV 110) to perform operations, comprising: transmitting a first communication (e.g., communication 197A), wherein the first communication includes a request for a location code (e.g., location code 150A) and is transmitted to an electric vehicle supply equipment (e.g., EVSE 120) connected to the EV, wherein the first communication is configured in compliance with International Organization of Standardization (ISO) 15118-2 (e.g., specification 117A), and the location code identifies a location (e.g., location *L1*) of the EVSE.

At 3120, the method can further comprise receiving a second communication (e.g., communication 197B), wherein the second communication includes the location code, wherein the location code is a *Subdivision* code configured in accordance with ISO 3166-2 (e.g., specification 117B), wherein the second communication is received from the EVSE connected to the EV, and the second communication is configured in compliance with ISO 15118-2.

At 3130, the method can further comprise updating a location database (e.g., database/whitelist 190A) onboard the EV with the location code.

### 9. OBSERVATION TIME CONFIGURATION COMPLIANT WITH ISO15118-20 AND EN 50549-1

In another embodiment, during the initial stages of interaction and communication between EV 110, EVSE 120, and grid 130 (e.g., by computer system 180A, ECCC 115, computer system 180B, EVSE controller 122, computer system 180C, and/or grid controller 132) as part of a BPT operation with EV 110 functioning as an energy source for grid 130, an *observation time* is required to be met/elapse before EV 110 can perform the power transfer, as defined in EN 50549-1. As previously mentioned, communications between EV 110 and EVSE 120 are specified by ISO 15118-20.

During the *observation time* period, EV 110 and EVSE 120 (e.g., by computer system 180A, ECCC 115, computer system 180B, EVSE controller 122, computer system 180C, and/or grid controller 132) can perform such functions as exchanging respective technical information/limits regarding BPT (charging/discharging) such as confirming that respective operating conditions (e.g., frequency, voltage, and suchlike, per TABLE 2) are as required for energy transfer between the EV 110 and EVSE 120 without damaging, for example, battery 112 or infrastructure/components of grid 130.

**TABLE 2: Respective parameters, settings, and ranges observed during initiating a BPT operation.**

| **PARAMETER** | **RANGE** | **DEFAULT SETTING** |
|---|---|---|
| LOWER FREQUENCY | 47.0 - 50.0 Hertz (Hz) | 49.5 Hz |
| UPPER FREQUENCY | 50.0 - 52.0 Hz | 50.1 Hz |
| LOWER VOLTAGE | 50% - 100% Uₙ | 85% Uₙ |
| UPPER VOLTAGE | 100% - 120% Uₙ | 100% Uₙ |
| OBSERVATION TIME | 10 - 600 seconds | 60 seconds |
| ACTIVE POWER INCREASE GRADIENT | 6 - 3000%/minute | disabled |

In an example scenario, awaiting the *observation time* to elapse can be performed during the initial stages of charging/discharging, and can also be performed after a loss of communication/connection between EV 110 and EVSE 120, e.g., in the event of a "grid emergency" that causes interruption of energy transfer between the EV 110 and EVSE 120.

A consequence of satisfying the *observation time* requirement is that while the *observation time* is being complied with, there is a corresponding loss of charging/discharging time. For example, with a setting for the *observation time* of 60 seconds, no BPT operation(s) can occur for the required 60 seconds.

Operation of an EV 110 and EVSE 120 in a BPT process can be improved by implementing a procedure that confirms EVSE 120 has performed a check that the EVSE 120 and/or the EV 110 can function (e.g., are authorized) as a power source/generator for the grid 130 (e.g., communications between EVSE controller 122 and grid controller 132).

As previously mentioned, during initiating a BPT operation, a *ServiceDetail* request (also known as, *ServiceDetailRequest, ServiceDetailReq*) and a *ServiceDetail* response (also known as a *ServiceDetailResponse, ServiceDetailRes*) (e.g., in data 150A-n) can be exchanged. A new element/parameter, *GridObservationCompleted ,* can be added to the *DERControlFunctions* Bitmap information exchanged in the *ServiceDetailReq* and *ServiceDetailRes* communications. In an embodiment, the *GridObservationCompleted* parameter can Boolean in nature, e.g., TRUE or FALSE.

In an example, the EVSE 120 can send an instruction (e.g., in data 150A-n) with parameter *GridObservationCompleted* being set to FALSE, indicating the observation time is still in effect (e.g., has not yet expired), and also set *discharge and*/*or charge limit* to 0, preventing any energy discharge from the EV 110. When the *observation time* has elapsed/expired, the *GridObservationCompleted* can be set to TRUE, and the value for the *discharge*/*charge limit* can be set to a value greater than 0, enabling EV 110 to discharge energy in accordance with the greater than 0 setting of the *discharge*/*charge limit.*

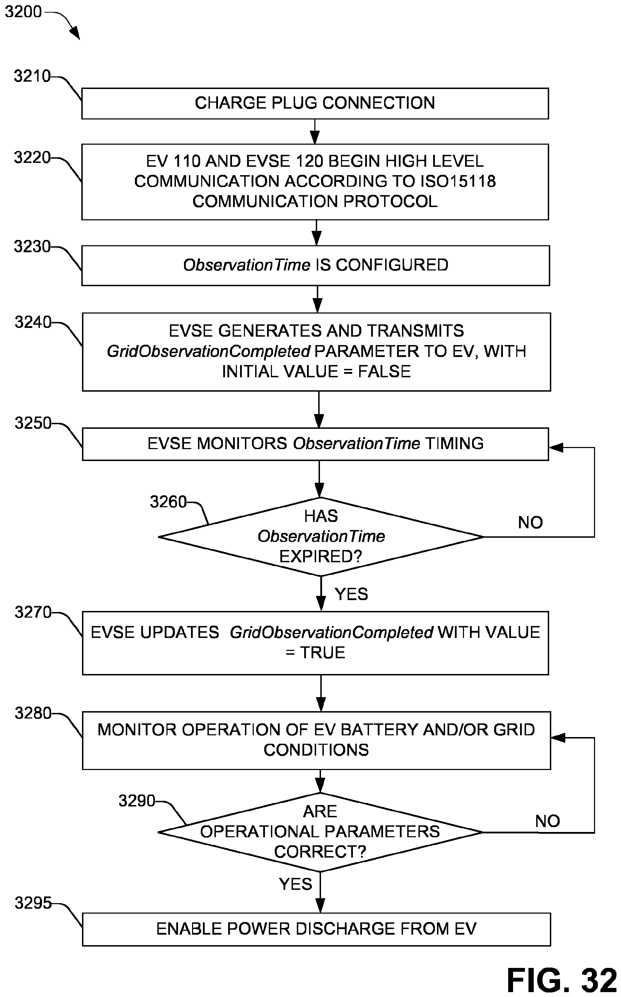

FIG. 32 illustrates a flow diagram 3200 for a computer-implemented process to enable an EV, connected to an EVSE, to function as a generator on an electric grid in accordance with a requirement to satisfy an observation time, in accordance with at least one embodiment.

At 3210, an EV (e.g., EV 110) is electrically coupled (e.g., with charging cable 116) to an EVSE (e.g., EVSE 120), wherein the EVSE is further electrically coupled to an energy grid (e.g., grid 130), the grid can be operated by a DSO (e.g., DSO 138).

At 3220, the EV (e.g., EVCC 115) and the EVSE (e.g., EVSE controller 122) can conduct high level communication (e.g., to transfer data 150A-n), wherein the communications can be conducted in accordance with ISO 15118 communication protocols.

At 3230, an *ObservationTime* parameter can be configured (e.g., by computer system 180B), wherein, as previously described, the *ObservationTime* defines a minimum time period for which an operating condition(s) of the EV battery (e.g., battery 112) or the grid are monitored to ensure no adverse condition will occur when EV battery and the grid are connected. It is to be noted that the *ObservationTime* can be configured at any time, e.g., *ObservationTime* has a default setting of 60 seconds configured for the EV, and can further be configured at the EV 110 (e.g., via computer system 180A, ECCC 115), at EVSE 120 (e.g., via computer system 180B, EVSE controller 122), and/or at grid 130 (e.g., via computer system 180C, grid controller 132, and/or GCC 133)

At 3240, as an initial condition of a BPT process, the EVSE (e.g., EVSE controller 122) can be configured to generate and transmit an *GridObservationCompleted* to the EV (e.g., at EVCC 115), wherein the *GridObservationCompleted* parameter has an initial value of TRUE, indicating that the *ObservationTime* is to be enacted and observed. In an embodiment, the *GridObservationCompleted* parameter (and associated setting) can be transmitted between the EVSE and the EV as a parameter in the *DERControlFunctions Bitmap,* as part of the *ServiceDetailReq* and *ServiceDetailRes* communications under ISO 15118 communication protocol. The EVSE can be further configured to set the *discharge and*/*or charge limit* parameter to a value of 0 (zero), preventing discharge of the battery.

At 3250, the EVSE is configured to initiate an *ObservationTime* procedure, with the EVSE further configured to monitor the *ObservationTime* (e.g., via a digital clock/timer located at the EVSE).

At 3260, in response to a determination by the EVSE that NO the *ObservationTime* has not expired, process 3200 can return to step 3250, for further monitoring of the *ObservationTime* by the EVSE.

At 3260, in response to a determination by the EVSE that YES the *ObservationTime* has elapsed/expired, process 3200 can advance to step 3270, whereupon the EVSE updates the *GridObservationCompleted* parameter with a value of FALSE. Process 3200 can advance to step 3280.

At 3280, the EVSE can be further configured to monitor operation of the EV battery and/or the grid conditions, such that even though the *ObservationTime* period may have elapsed, the EVSE further ensures that the current operating conditions are such that no damage occurs by enabling the EV to function as a power source. In an example scenario, the EVSE can compare the current operating conditions with those presented above in TABLE 2.

At 3290, in response to a determination by the EVSE that NO, the current operating conditions are not acceptable (e.g., the battery or the grid is operating with an unacceptable frequency, voltage), process 3200 can return to step 3280 for further monitoring of the current operating conditions.

At 3290, in response to a determination by the EVSE that YES, the current operating conditions are acceptable, process 3200 can advance to step 3295, whereupon, given both the *GridObservationCompleted* parameter has a value of TRUE and the current operating conditions at both the battery and the grid are acceptable, power discharge from the EV can be enabled. For example, the *discharge and*/*or charge limit* parameter can be set by the EVSE to a value greater than 0 in accordance with the required discharge of the battery (e.g., as configured by an owner of the EV).

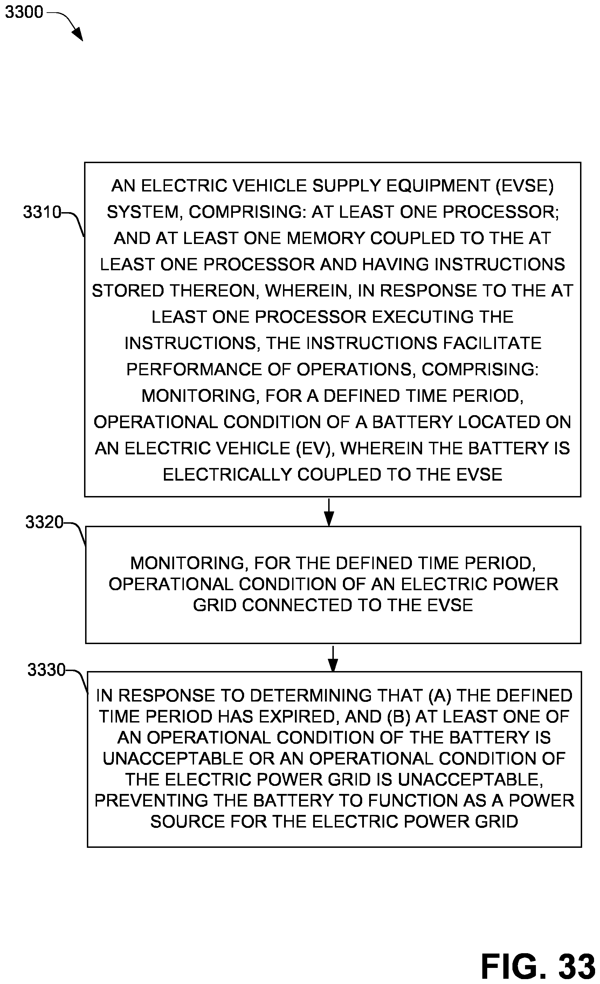

**FIG. 33****,** via flowchart 3300, presents a computer-implemented method for ensuring an EV has the correct location code for an EVSE, enabling BPT between the EV and the EVSE, in accordance with an embodiment.

At 3310, method 3300 can comprise an electric vehicle supply equipment (EVSE) system (e.g., EVSE 120 system comprising EVSE controller 122), comprising at least one processor (e.g., processor 182B) and at least one memory (e.g., memory 184B) coupled to the at least one processor and having instructions stored thereon. In response to the at least one processor executing the instructions, the instructions facilitate performance of operations, comprising: monitoring, for a defined time period (e.g., *Observation Time*)*,* operational condition of a battery (e.g., battery 112A-*n*) located on an electric vehicle (EV) (e.g., EV 110), wherein the battery is electrically coupled to the EVSE.

At 3320, method 3300 can further comprise monitoring, for the defined time period, operational condition of an electric power grid (e.g., grid 130) connected to the EVSE.

At 3330, method 3300 can further comprise, and in response to determining that (a) the defined time period has expired, and (b) at least one of an operational condition of the battery is unacceptable or an operational condition of the electric power grid is unacceptable, preventing the battery to function as a power source for the electric power grid.

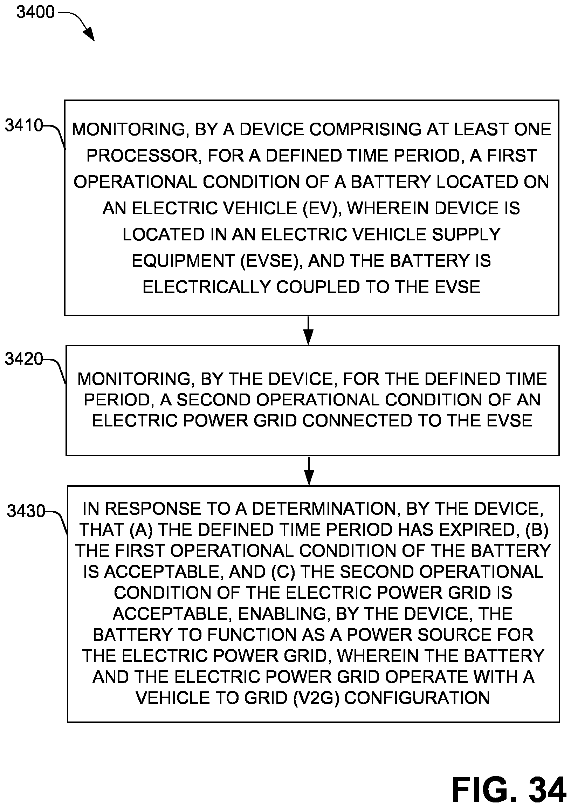

**FIG. 34****,** via flowchart 3400, presents a computer-implemented method for ensuring an EV has the correct location code for an EVSE, enabling BPT between the EV and the EVSE, in accordance with an embodiment.

At 3410, method 3400 can comprise monitoring, by a device (e.g., EVSE 120 system comprising EVSE controller 122) comprising at least one processor (e.g., processor 182B), for a defined time period (e.g., *Observation Time*)*,* a first operational condition of a battery (e.g., battery 112A-n) located on an electric vehicle (EV) (e.g., EV 110), wherein device is located in an electric vehicle supply equipment (EVSE) (e.g., EVSE 120 system comprising EVSE controller 122), and the battery is electrically coupled to the EVSE.

At 3420, method 3400 can further comprise monitoring, by the device, for the defined time period, a second operational condition of an electric power grid (e.g., grid 130) connected to the EVSE.

At 3430, method 3400 can further comprise, in response to a determination, by the device, that (a) the defined time period has expired, (b) the first operational condition of the battery is acceptable, and (c) the second operational condition of the electric power grid is acceptable, enabling, by the device, the battery to function as a power source for the electric power grid, wherein the battery and the electric power grid operate with a vehicle to grid (V2G) configuration.

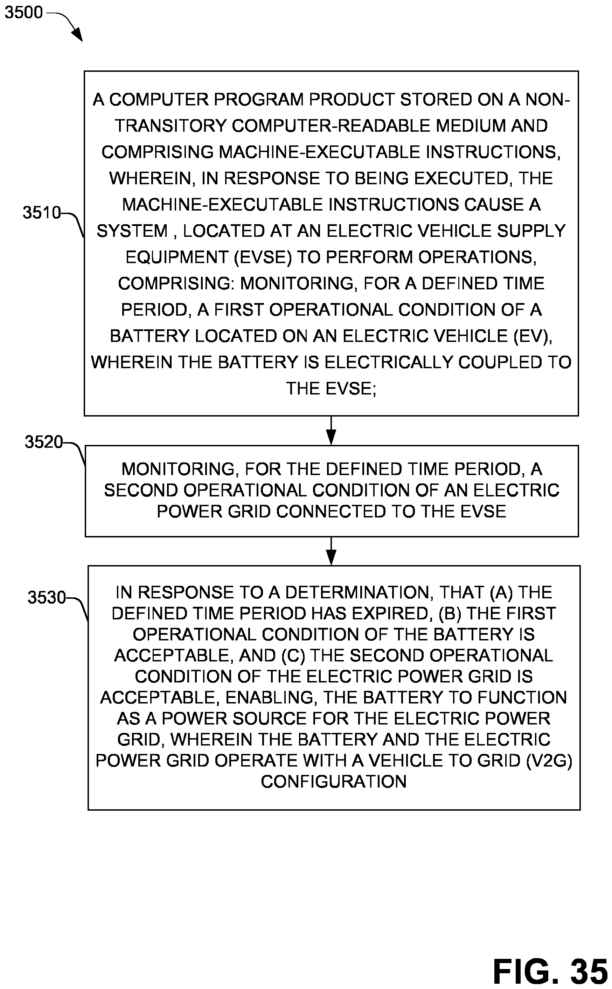

**FIG. 35****,** via flowchart 3500, presents a computer-implemented method for ensuring an EV has the correct location code for an EVSE, enabling BPT between the EV and the EVSE, in accordance with an embodiment.

At 3510, method 3500 can utilize a computer program product stored on a non-transitory computer-readable medium (e.g., memory 184A-n) and comprising machine-executable instructions (e.g., executable by processor 182A-n), wherein, in response to being executed, the machine-executable instructions cause a system (e.g., EVSE 120 system comprising EVSE controller 122), located at an electric vehicle supply equipment (EVSE) to perform operations, comprising: monitoring, for a defined time period (e.g., *Observation Time*)*, a* first operational condition of a battery (e.g., battery 112A-n) located on an electric vehicle (EV) (e.g., EV 110), wherein the battery is electrically coupled to the EVSE.

At 3520, method 3500 can further comprise monitoring, for the defined time period, a second operational condition of an electric power grid (e.g., grid 130) connected to the EVSE.

At 3530, method 3500 can further comprise, in response to a determination, that (a) the defined time period has expired, (b) the first operational condition of the battery is acceptable, and (c) the second operational condition of the electric power grid is acceptable, enabling, the battery to function as a power source for the electric power grid, wherein the battery and the electric power grid operate with a vehicle to grid (V2G) configuration.

### 10. EXAMPLE OPERATING ENVIRONMENT AND SCENARIOS

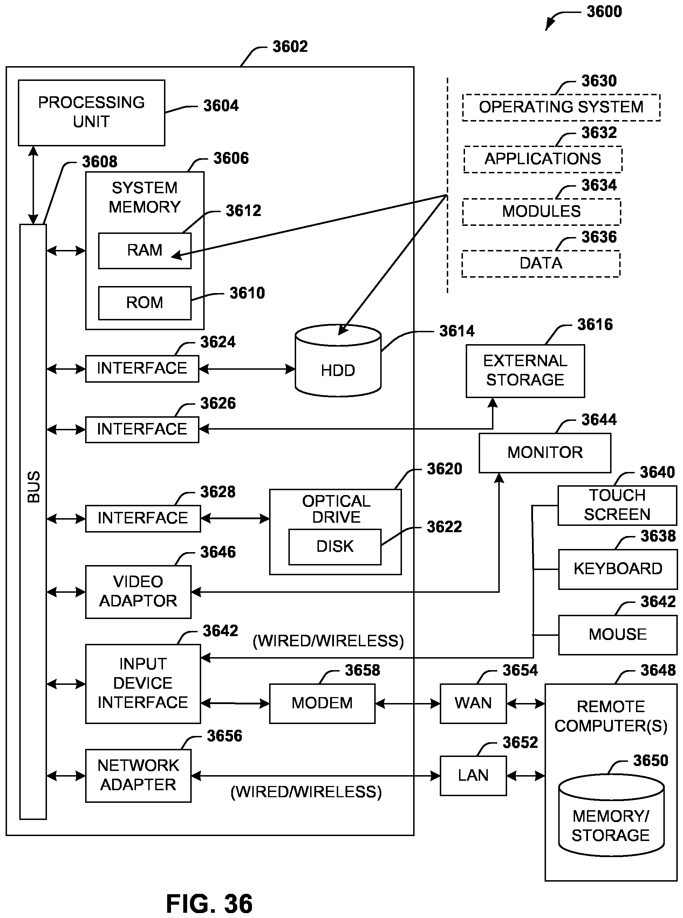

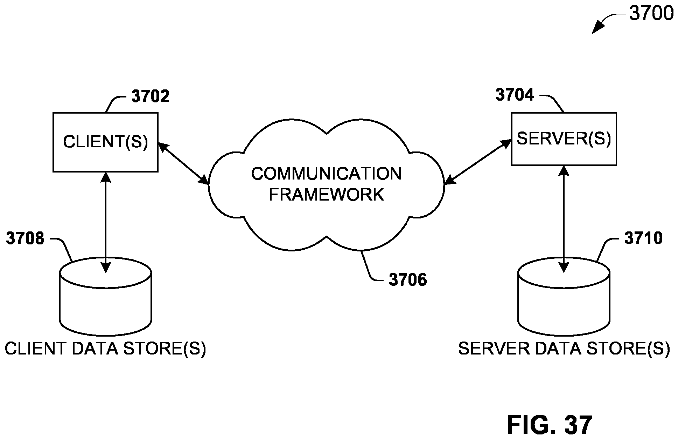

Turning next to **FIGS. 36** **and** **37****,** a detailed description is provided of additional context for the one or more embodiments described herein with FIGS. 1A-35.

In order to provide additional context for various embodiments described herein, FIG. 36 and the following discussion are intended to provide a brief, general description of a suitable computing environment 3600 in which the various embodiments described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the methods can be practiced with other computer system configurations, including single-processor or multiprocessor computer systems, minicomputers, mainframe computers, IoT devices, distributed computing systems, as well as personal computers, hand-held computing devices, microprocessor-based or programmable consumer electronics, and the like, each of which can be operatively coupled to one or more associated devices.

The embodiments illustrated herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infra-red and other wireless media.

With reference again to **FIG. 36****,** the example environment 3600 for implementing various embodiments of the aspects described herein includes a computer 3602, the computer 3602 including a processing unit 3604, a system memory 3606 and a system bus 3608. The system bus 3608 couples system components including, but not limited to, the system memory 3606 to the processing unit 3604. The processing unit 3604 can be any of various commercially available processors and may include a cache memory. Dual microprocessors and other multi-processor architectures can also be employed as the processing unit 3604.

The system bus 3608 can be any of several types of bus structure that can further interconnect to a memory bus (with or without a memory controller), a peripheral bus, and a local bus using any of a variety of commercially available bus architectures. The system memory 3606 includes ROM 3610 and RAM 3612. A basic input/output system (BIOS) can be stored in a non-volatile memory such as ROM, erasable programmable read only memory (EPROM), EEPROM, which BIOS contains the basic routines that help to transfer information between elements within the computer 3602, such as during startup. The RAM 3612 can also include a high-speed RAM such as static RAM for caching data.

The computer 3602 further includes an internal hard disk drive (HDD) 3614 (e.g., EIDE, SATA), one or more external storage devices 3616 (e.g., a magnetic floppy disk drive (FDD) 3616, a memory stick or flash drive reader, a memory card reader, etc.) and an optical disk drive 3620 (e.g., which can read or write from a CD-ROM disc, a DVD, a BD, etc.). While the internal HDD 3614 is illustrated as located within the computer 3602, the internal HDD 3614 can also be configured for external use in a suitable chassis (not shown). Additionally, while not shown in environment 3600, a solid-state drive (SSD) could be used in addition to, or in place of, an HDD 3614. The HDD 3614, external storage device(s) 3616 and optical disk drive 3620 can be connected to the system bus 3608 by an HDD interface 3624, an external storage interface 3626 and an optical drive interface 3628, respectively. The interface 3624 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 3602, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 3612, including an operating system 3630, one or more application programs 3632, other program modules 3634 and program data 3636. All or portions of the operating system, applications, modules, and/or data can also be cached in the RAM 3612. The systems and methods described herein can be implemented utilizing various commercially available operating systems or combinations of operating systems.

Computer 3602 can optionally comprise emulation technologies. For example, a hypervisor (not shown) or other intermediary can emulate a hardware environment for operating system 3630, and the emulated hardware can optionally be different from the hardware illustrated in FIG. 36. In such an embodiment, operating system 3630 can comprise one virtual machine (VM) of multiple VMs hosted at computer 3602. Furthermore, operating system 3630 can provide runtime environments, such as the Java runtime environment or the .NET framework, for applications 3632. Runtime environments are consistent execution environments that allow applications 3632 to run on any operating system that includes the runtime environment. Similarly, operating system 3630 can support containers, and applications 3632 can be in the form of containers, which are lightweight, standalone, executable packages of software that include, e.g., code, runtime, system tools, system libraries and settings for an application.

Further, computer 3602 can comprise a security module, such as a trusted processing module (TPM). For instance with a TPM, boot components hash next in time boot components, and wait for a match of results to secured values, before loading a next boot component. This process can take place at any layer in the code execution stack of computer 3602, e.g., applied at the application execution level or at the operating system (OS) kernel level, thereby enabling security at any level of code execution.

A user can enter commands and information into the computer 3602 through one or more wired/wireless input devices, e.g., a keyboard 3638, a touch screen 3640, and a pointing device, such as a mouse 3642. Other input devices (not shown) can include a microphone, an infra-red (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 3604 through an input device interface 3644 that can be coupled to the system bus 3608, but can be connected by other interfaces, such as a parallel port, an IEEE 1394 serial port, a game port, a USB port, an IR interface, a BLUETOOTH^{®} interface, etc.

A monitor 3646 or other type of display device can be also connected to the system bus 3608 via an interface, such as a video adapter 3648. In addition to the monitor 3646, a computer typically includes other peripheral output devices (not shown), such as speakers, printers, etc.

The computer 3602 can operate in a networked environment using logical connections via wired and/or wireless communications to one or more remote computers, such as a remote computer(s) 3650. The remote computer(s) 3650 can be a workstation, a server computer, a router, a personal computer, portable computer, microprocessor-based entertainment appliance, a peer device or other common network node, and typically includes many or all of the elements described relative to the computer 3602, although, for purposes of brevity, only a memory/storage device 3652 is illustrated. The logical connections depicted include wired/wireless connectivity to a local area network (LAN) 3654 and/or larger networks, e.g., a wide area network (WAN) 3656. Such LAN and WAN networking environments are commonplace in offices and companies, and facilitate enterprise-wide computer networks, such as intranets, all of which can connect to a global communications network, e.g., the internet.

When used in a LAN networking environment, the computer 3602 can be connected to the local network 3654 through a wired and/or wireless communication network interface or adapter 3658. The adapter 3658 can facilitate wired or wireless communication to the LAN 3654, which can also include a wireless access point (AP) disposed thereon for communicating with the adapter 3658 in a wireless mode.

When used in a WAN networking environment, the computer 3602 can include a modem 3660 or can be connected to a communications server on the WAN 3656 via other means for establishing communications over the WAN 3656, such as by way of the internet. The modem 3660, which can be internal or external and a wired or wireless device, can be connected to the system bus 3608 via the input device interface 3644. In a networked environment, program modules depicted relative to the computer 3602 or portions thereof, can be stored in the remote memory/storage device 3652. It will be appreciated that the network connections shown are example and other means of establishing a communications link between the computers can be used.

When used in either a LAN or WAN networking environment, the computer 3602 can access cloud storage systems or other network-based storage systems in addition to, or in place of, external storage devices 3616 as described above. Generally, a connection between the computer 3602 and a cloud storage system can be established over a LAN 3654 or WAN 3656 e.g., by the adapter 3658 or modem 3660, respectively. Upon connecting the computer 3602 to an associated cloud storage system, the external storage interface 3626 can, with the aid of the adapter 3658 and/or modem 3660, manage storage provided by the cloud storage system as it would other types of external storage. For instance, the external storage interface 3626 can be configured to provide access to cloud storage sources as if those sources were physically connected to the computer 3602.

The computer 3602 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

The above description includes non-limiting examples of the various embodiments. It is, of course, not possible to describe every conceivable combination of components or methodologies for purposes of describing the disclosed subject matter, and one skilled in the art may recognize that further combinations and permutations of the various embodiments are possible. The disclosed subject matter is intended to embrace all such alterations, modifications, and variations that fall within the spirit and scope of the appended claims.

Referring now to details of one or more elements illustrated at FIG. 37, an illustrative cloud computing environment 3700 is depicted. FIG. 37 is a schematic block diagram of a computing environment 3700 with which the disclosed subject matter can interact. The system 3700 comprises one or more remote component(s) 3710. The remote component(s) 3710 can be hardware and/or software (e.g., threads, processes, computing devices). In some embodiments, remote component(s) 3710 can be a distributed computer system, connected to a local automatic scaling component and/or programs that use the resources of a distributed computer system, via communication framework 3740. Communication framework 3740 can comprise wired network devices, wireless network devices, mobile devices, wearable devices, radio access network devices, gateway devices, femtocell devices, servers, etc.

The system 3700 also comprises one or more local component(s) 3720. The local component(s) 3720 can be hardware and/or software (e.g., threads, processes, computing devices). In some embodiments, local component(s) 3720 can comprise an automatic scaling component and/or programs that communicate / use the remote resources 3710 and 3720, etc., connected to a remotely located distributed computing system via communication framework 3740.

One possible communication between a remote component(s) 3710 and a local component(s) 3720 can be in the form of a data packet adapted to be transmitted between two or more computer processes. Another possible communication between a remote component(s) 3710 and a local component(s) 3720 can be in the form of circuit-switched data adapted to be transmitted between two or more computer processes in radio time slots. The system 3700 comprises a communication framework 3740 that can be employed to facilitate communications between the remote component(s) 3710 and the local component(s) 3720, and can comprise an air interface, e.g., Uu interface of a UMTS network, via a long-term evolution (LTE) network, etc. Remote component(s) 3710 can be operably connected to one or more remote data store(s) 3750, such as a hard drive, solid state drive, SIM card, device memory, etc., that can be employed to store information on the remote component(s) 3710 side of communication framework 3740. Similarly, local component(s) 3720 can be operably connected to one or more local data store(s) 3730, that can be employed to store information on the local component(s) 3720 side of communication framework 3740.

With regard to the various functions performed by the above described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature may be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The terms "first," "second," "third," and so forth, as used in the claims, unless otherwise clear by context, is for clarity only and doesn't otherwise indicate or imply any order in time. For instance, "a first determination," "a second determination," and "a third determination," does not indicate or imply that the first determination is to be made before the second determination, or vice versa, etc.

As used in this disclosure, in some embodiments, the terms "component," "system" and the like are intended to refer to, or comprise, a computer-related entity or an entity related to an operational apparatus with one or more specific functionalities, wherein the entity can be either hardware, a combination of hardware and software, software, or software in execution. As an example, a component can be, but is not limited to being, a process running on a processor, a processor, an object, an executable, a thread of execution, computer-executable instructions, a program, and/or a computer. By way of illustration and not limitation, both an application running on a server and the server can be a component.

One or more components can reside within a process and/or thread of execution and a component can be localized on one computer and/or distributed between two or more computers. In addition, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the internet with other systems via the signal). As another example, a component can be an apparatus with specific functionality provided by mechanical parts operated by electric or electronic circuitry, which is operated by a software application or firmware application executed by a processor, wherein the processor can be internal or external to the apparatus and executes at least a part of the software or firmware application. As yet another example, a component can be an apparatus that provides specific functionality through electronic components without mechanical parts, the electronic components can comprise a processor therein to execute software or firmware that confers at least in part the functionality of the electronic components. While various components have been illustrated as separate components, it will be appreciated that multiple components can be implemented as a single component, or a single component can be implemented as multiple components, without departing from example embodiments.

The term "facilitate" as used herein is in the context of a system, device or component "facilitating" one or more actions or operations, in respect of the nature of complex computing environments in which multiple components and/or multiple devices can be involved in some computing operations. Non-limiting examples of actions that may or may not involve multiple components and/or multiple devices comprise transmitting or receiving data, establishing a connection between devices, determining intermediate results toward obtaining a result, etc. In this regard, a computing device or component can facilitate an operation by playing any part in accomplishing the operation. When operations of a component are described herein, it is thus to be understood that where the operations are described as facilitated by the component, the operations can be optionally completed with the cooperation of one or more other computing devices or components, such as, but not limited to, sensors, antennae, audio and/or visual output devices, other devices, etc.

Further, the various embodiments can be implemented as a method, apparatus or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable (or machine-readable) device or computer-readable (or machine-readable) storage/communications media. For example, computer readable storage media can comprise, but are not limited to, magnetic storage devices (e.g., hard disk, floppy disk, magnetic strips), optical disks (e.g., compact disk (CD), digital versatile disk (DVD)), smart cards, and flash memory devices (e.g., card, stick, key drive). Of course, those skilled in the art will recognize many modifications can be made to this configuration without departing from the scope or spirit of the various embodiments.

Moreover, terms such as "mobile device equipment," "mobile station," "mobile," "subscriber station," "access terminal," "terminal," "handset," "communication device," "mobile device" (and/or terms representing similar terminology) can refer to a wireless device utilized by a subscriber or mobile device of a wireless communication service to receive or convey data, control, voice, video, sound, gaming or substantially any data-stream or signaling-stream. The foregoing terms are utilized interchangeably herein and with reference to the related drawings. Likewise, the terms "access point (AP)," "Base Station (BS)," "BS transceiver," "BS device," "cell site," "cell site device," "gNode B (gNB)," "evolved Node B (eNode B, eNB)," "home Node B (HNB)" and the like, refer to wireless network components or appliances that transmit and/or receive data, control, voice, video, sound, gaming or substantially any data-stream or signaling-stream from one or more subscriber stations. Data and signaling streams can be packetized or frame-based flows.

Furthermore, the terms "device," "communication device," "mobile device," "subscriber," "client entity," "consumer," "client entity," "entity" and the like are employed interchangeably throughout, unless context warrants particular distinctions among the terms. It should be appreciated that such terms can refer to human entities or automated components supported through artificial intelligence (e.g., a capacity to make inference based on complex mathematical formalisms), which can provide simulated vision, sound recognition and so forth.

It should be noted that although various aspects and embodiments are described herein in the context of 5G or other next generation networks, the disclosed aspects are not limited to a 5G implementation, and can be applied in other network next generation implementations, such as sixth generation (6G), or other wireless systems. In this regard, aspects or features of the disclosed embodiments can be exploited in substantially any wireless communication technology. Such wireless communication technologies can include universal mobile telecommunications system (UMTS), global system for mobile communication (GSM), code division multiple access (CDMA), wideband CDMA (WCMDA), CDMA2000, time division multiple access (TDMA), frequency division multiple access (FDMA), multi-carrier CDMA (MC-CDMA), single-carrier CDMA (SC-CDMA), single-carrier FDMA (SC-FDMA), orthogonal frequency division multiplexing (OFDM), discrete Fourier transform spread OFDM (DFT-spread OFDM), filter bank based multi-carrier (FBMC), zero tail DFT-spread-OFDM (ZT DFT-s-OFDM), generalized frequency division multiplexing (GFDM), fixed mobile convergence (FMC), universal fixed mobile convergence (UFMC), unique word OFDM (UW-OFDM), unique word DFT-spread OFDM (UW DFT-Spread-OFDM), cyclic prefix OFDM (CP-OFDM), resource-block-filtered OFDM, wireless fidelity (Wi-Fi), worldwide interoperability for microwave access (WiMAX), wireless local area network (WLAN), general packet radio service (GPRS), enhanced GPRS, third generation partnership project (3GPP), long term evolution (LTE), 5G, third generation partnership project 2 (3GPP2), ultra-mobile broadband (UMB), high speed packet access (HSPA), evolved high speed packet access (HSPA+), high-speed downlink packet access (HSDPA), high-speed uplink packet access (HSUPA), Zigbee, or another institute of electrical and electronics engineers (IEEE) 802.12 technology.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Various non-limiting aspects of various embodiments described herein are presented in the following clauses:
Clause 1. An electric vehicle supply equipment (EVSE) system, comprising: at least one processor; and at least one memory coupled to the at least one processor and having instructions stored thereon, wherein, in response to the at least one processor executing the instructions, the instructions facilitate performance of operations, comprising: monitoring, for a defined time period, operational condition of a battery located on an electric vehicle (EV), wherein the battery is electrically coupled to the EVSE; monitoring, for the defined time period, operational condition of an electric power grid connected to the EVSE; and in response to determining that (a) the defined time period has expired, and (b) at least one of an operational condition of the battery is unacceptable or an operational condition of the electric power grid is unacceptable, preventing the battery to function as a power source for the electric power grid.
Clause 2. The EVSE system of any preceding clause, wherein the operations further comprise, in response to determining that (a) the defined time period has expired, (b) the operational condition of the battery is acceptable, and (c) the operational condition of the electric power grid is acceptable, enabling the battery to function as a power source for the electric power grid, wherein the battery and the electric power grid operate with a vehicle to grid (V2G) configuration.
Clause 3. The EVSE system of any preceding clause, wherein the operations further comprise: in response to determining the defined time period has expired, configuring a *GridObservationCompleted* parameter with a value of TRUE; and transmitting the *GridObservationCompleted* parameter with the value of TRUE to the EV.
Clause 4. The EVSE system of any preceding clause, wherein the defined time period is an *ObservationTime* defining a minimum time period for which the operational condition of the battery and the operational condition of the grid are monitored to ensure no adverse operating condition is present during connection of the battery to the grid via the EVSE system, and the *GridObservationCompleted* parameter having a value of TRUE indicates the *ObservationTime* has elapsed.
Clause 5. The EVSE system of any preceding clause, wherein the operations further comprise: setting a *discharge limit* parameter to a discharge value, wherein the discharge limit parameter defines a magnitude of a discharge operation between the battery and the grid; and in response to determining the *GridObservationCompleted* parameter having a value of TRUE, implementing the *discharge limit* parameter at the battery to facilitate discharge of electrical energy between the battery and the grid, via the EVSE.
Clause 6. The EVSE system of any preceding clause, wherein the operations further comprise: in response to a determination that the defined time period has not expired, configuring a *GridObservationCompleted* parameter with a value of FALSE; and transmitting the *GridObservationCompleted* parameter with the value of FALSE to the EV, preventing power discharge by the EV to the grid.
Clause 7. The EVSE system of any preceding clause, wherein the defined time period is an *ObservationTime* defining a minimum time period for which the operational condition of the battery and the operational condition of the grid are monitored to ensure no adverse operating condition during connection of the battery to the grid via the EVSE system, and the *GridObservationCompleted* parameter having a value of FALSE indicates the *ObservationTime* has not elapsed.
Clause 8. The EVSE system of any preceding clause, wherein the *GridObservationCompleted* parameter is transmitted in a communication between the EVSE and the EV, and wherein the communication is transmitted in compliance with International Organization of Standardization (ISO) 15118-20.
Clause 9. The EVSE system of any preceding clause, wherein the battery is configured to provide electrical energy to at least one component located on the EV.
Clause 10. A computer-implemented method comprising: monitoring, by a device comprising at least one processor, for a defined time period, a first operational condition of a battery located on an electric vehicle (EV), wherein device is located in an electric vehicle supply equipment (EVSE), and the battery is electrically coupled to the EVSE; monitoring, by the device, for the defined time period, a second operational condition of an electric power grid connected to the EVSE; and in response to a determination, by the device, that (a) the defined time period has expired, (b) the first operational condition of the battery is acceptable, and (c) the second operational condition of the electric power grid is acceptable, enabling, by the device, the battery to function as a power source for the electric power grid, wherein the battery and the electric power grid operate with a vehicle to grid (V2G) configuration.
Clause 11. The computer-implemented method of any preceding clause, further comprising: in response to determining the defined time period has expired, configuring, by the device, a *GridObservationCompleted* parameter with a value of TRUE; and transmitting, by the device, the *GridObservationCompleted* parameter with the value of TRUE to the EV.
Clause 12. The computer-implemented method of any preceding clause, wherein the *GridObservationCompleted* parameter is transmitted in a communication between the EVSE and the EV, and wherein the communication is transmitted between the EV and the EVSE in compliance with International Organization of Standardization (ISO) 15118-20.
Clause 13. The computer-implemented method of any preceding clause, further comprising: in response to a determination, by the device, that (a) the defined time period has expired, and (b) at least one of the operational condition of the battery is unacceptable or the operational condition of the electric power grid is unacceptable, preventing, by the device, the battery to function as a power source for the electric power grid.
Clause 14. The computer-implemented method of any preceding clause, further comprising, in response to a determination, by the device, that the defined time period has not expired: configuring, by the device, a *GridObservationCompleted* parameter with a value of FALSE; and transmitting, by the device, the *GridObservationCompleted* parameter with the value of FALSE to the EV, to prevent power discharge by the EV to the grid.
Clause 15. The computer-implemented method of any preceding clause, wherein the battery is configured to provide electrical energy to at least one component located on the EV.
Clause 16. A computer program product stored on a non-transitory computer-readable medium and comprising machine-executable instructions, wherein, in response to being executed, the machine-executable instructions cause a system , located at an electric vehicle supply equipment (EVSE) to perform operations, comprising: monitoring, for a defined time period, a first operational condition of a battery located on an electric vehicle (EV), wherein the battery is electrically coupled to the EVSE; monitoring, for the defined time period, a second operational condition of an electric power grid connected to the EVSE; and in response to a determination, that (a) the defined time period has expired, (b) the first operational condition of the battery is acceptable, and (c) the second operational condition of the electric power grid is acceptable, enabling, the battery to function as a power source for the electric power grid, wherein the battery and the electric power grid operate with a vehicle to grid (V2G) configuration.
Clause 17. The computer program product of any preceding clause, wherein the operations further comprising, in response to a determination, that the defined time period has expired: configuring a *GridObservationCompleted* parameter with a value of TRUE; and transmitting the *GridObservationCompleted* parameter with the value of TRUE to the EV.
Clause 18. The computer program product of any preceding clause, wherein the operations further comprising, in response to a determination, that (a) the defined time period has expired, and (b) at least one of the operational condition of the battery is unacceptable or the operational condition of the electric power grid is unacceptable, preventing the battery to function as a power source for the electric power grid.
Clause 19. The computer program product of any preceding clause, wherein the operations further comprising, in response to a determination that the defined time period has not expired: configuring a *GridObservationCompleted* parameter with a value of FALSE; and transmitting the *GridObservationCompleted* parameter with the value of FALSE to the EV, to prevent power discharge by the EV to the grid.
Clause 20. The computer program product of any preceding clause, wherein the battery is configured to provide electrical energy to at least one component located on the EV

In various cases, any suitable combination of clauses 1-9 can be implemented.

In various cases, any suitable combination of clauses 10-15 can be implemented.

In various cases, any suitable combination of clauses 16-20 can be implemented.

## Claims

1. An electric vehicle supply equipment (EVSE) system, comprising:
at least one processor; and
at least one memory coupled to the at least one processor and having instructions stored thereon, wherein, in response to the at least one processor executing the instructions, the instructions facilitate performance of operations, comprising:
monitoring, for a defined time period, operational condition of a battery located on an electric vehicle (EV), wherein the battery is electrically coupled to the EVSE;
monitoring, for the defined time period, operational condition of an electric power grid connected to the EVSE; and
in response to determining that (a) the defined time period has expired, and (b) at least one of an operational condition of the battery is unacceptable or an operational condition of the electric power grid is unacceptable, preventing the battery to function as a power source for the electric power grid.

2. The EVSE system of claim 1, the operations further comprising:
in response to determining that (a) the defined time period has expired, (b) the operational condition of the battery is acceptable, and (c) the operational condition of the electric power grid is acceptable, enabling the battery to function as a power source for the electric power grid, wherein the battery and the electric power grid operate with a vehicle to grid (V2G) configuration.

3. The EVSE system of claim 2, the operations further comprising:
in response to determining the defined time period has expired, configuring a *GridObservationCompleted* parameter with a value of TRUE; and
transmitting the *GridObservationCompleted* parameter with the value of TRUE to the EV.

4. The EVSE system of claim 3, wherein the defined time period is an *ObservationTime* defining a minimum time period for which the operational condition of the battery and the operational condition of the grid are monitored to ensure no adverse operating condition is present during connection of the battery to the grid via the EVSE system, and the *GridObservationCompleted* parameter having a value of TRUE indicates the *ObservationTime* has elapsed.

5. The EVSE system of claim 3, the operations further comprising:
setting a *discharge limit* parameter to a discharge value, wherein the discharge limit parameter defines a magnitude of a discharge operation between the battery and the grid; and
in response to determining the *GridObservationCompleted* parameter having a value of TRUE, implementing the *discharge limit* parameter at the battery to facilitate discharge of electrical energy between the battery and the grid, via the EVSE.

6. The EVSE system of claim 1, the operations further comprising:
in response to a determination that the defined time period has not expired, configuring a *GridObservationCompleted* parameter with a value of FALSE; and
transmitting the *GridObservationCompleted* parameter with the value of FALSE to the EV, preventing power discharge by the EV to the grid.

7. The EVSE system of claim 6, wherein the defined time period is an *ObservationTime* defining a minimum time period for which the operational condition of the battery and the operational condition of the grid are monitored to ensure no adverse operating condition during connection of the battery to the grid via the EVSE system, and the *GridObservationCompleted* parameter having a value of FALSE indicates the *ObservationTime* has not elapsed.

8. The EVSE system of claim 6, wherein the *GridObservationCompleted* parameter is transmitted in a communication between the EVSE and the EV, and wherein the communication is transmitted in compliance with International Organization of Standardization (ISO) 15118-20.

9. The EVSE system of claim 1, wherein the battery is configured to provide electrical energy to at least one component located on the EV.

10. A computer-implemented method comprising:
monitoring, by a device comprising at least one processor, for a defined time period, a first operational condition of a battery located on an electric vehicle (EV), wherein device is located in an electric vehicle supply equipment (EVSE), and the battery is electrically coupled to the EVSE;
monitoring, by the device, for the defined time period, a second operational condition of an electric power grid connected to the EVSE; and
in response to a determination, by the device, that (a) the defined time period has expired, (b) the first operational condition of the battery is acceptable, and (c) the second operational condition of the electric power grid is acceptable, enabling, by the device, the battery to function as a power source for the electric power grid, wherein the battery and the electric power grid operate with a vehicle to grid (V2G) configuration.

11. The computer-implemented method of claim 10, further comprising:
in response to determining the defined time period has expired, configuring, by the device, a *GridObservationCompleted* parameter with a value of TRUE; and
transmitting, by the device, the *GridObservationCompleted* parameter with the value of TRUE to the EV.

12. The computer-implemented method of claim 11, wherein the *GridObservationCompleted* parameter is transmitted in a communication between the EVSE and the EV, and wherein the communication is transmitted between the EV and the EVSE in compliance with International Organization of Standardization (ISO) 15118-20.

13. The computer-implemented method of claim 10, further comprising:
in response to a determination, by the device, that (a) the defined time period has expired, and (b) at least one of the operational condition of the battery is unacceptable or the operational condition of the electric power grid is unacceptable, preventing, by the device, the battery to function as a power source for the electric power grid.

14. The computer-implemented method of claim 10, further comprising, in response to a determination, by the device, that the defined time period has not expired:
configuring, by the device, a *GridObservationCompleted* parameter with a value of FALSE; and
transmitting, by the device, the *GridObservationCompleted* parameter with the value of FALSE to the EV, to prevent power discharge by the EV to the grid.

15. A computer program product stored on a non-transitory computer-readable medium and comprising machine-executable instructions, wherein, in response to being executed, the machine-executable instructions cause a system, located at an electric vehicle supply equipment (EVSE) to perform operations, comprising:
monitoring, for a defined time period, a first operational condition of a battery located on an electric vehicle (EV), wherein the battery is electrically coupled to the EVSE;
monitoring, for the defined time period, a second operational condition of an electric power grid connected to the EVSE; and
in response to a determination, that (a) the defined time period has expired, (b) the first operational condition of the battery is acceptable, and (c) the second operational condition of the electric power grid is acceptable, enabling, the battery to function as a power source for the electric power grid, wherein the battery and the electric power grid operate with a vehicle to grid (V2G) configuration.
